# EUROPEAN PATENT APPLICATION

(11) **EP 1 610 093 A1**
(43) Date of publication of application: **28.12.2005**
(21) Application number: 04725165.7
(22) Date of filing: 01.04.2004
(51) Int. Cl.: G01C 21/34

(54) **NAVIGATION DEVICE, NAVIGATION METHOD, ROUTE DATA GENERATION PROGRAM, RECORDING MEDIUM CONTAINING ROUTE DATA GENERATION PROGRAM, AND SERVER DEVICE IN NAVIGATION SYSTEM**

(30) Priority: 03.04.2003 JP 2003100761; 30.04.2003 JP 2003124961
(71) Applicant: Pioneer Corporation, Tokyo 153-8654 (JP)
(72) Inventor: ICHIHARA, Naohiko, c/o Pioneer Corporation, Tsurugashima-shi, Saitama 350-2201 (JP); SUGIE, Shinichi, c/o Pioneer Corporation, Tsurugashima-shi, Saitama 350-2201 (JP); YAMAZAKI, Osamu, c/o Pioneer Corporation, Tsurugashima-shi, Saitama 350-2201 (JP); INOUE, Hiroto, c/o Pioneer Corporation, Tsurugashima-shi, Saitama 350-2201 (JP); SUDA, Hiroyuki, c/o Pioneer Corporation, Kawagoe-shi, Saitama 350-8555 (JP); YAMASHITA, Motoyuki, c/o Pioneer Corporation, Meguro-ku, Tokyo 153-8654 (JP); SHIODA, Takehiko, c/o Pioneer Corporation, Tsurugashima-shi, Saitama 350-2201 (JP)
(74) Representative: Tappe, Hartmut
(86) International application number: PCT/JP2004/004795
(87) International publication number: WO 2004/090472

(57) **Abstract**

To provide with a navigation apparatus capable of efficient route guidance in which a date on which route guidance process is performed coincides with an available date and time, and in consideration with a stay length.

The navigation apparatus in this implementation is provided with a GPS reception section, a sensor section, a map data storage section in which data such as map data is recorded in advance, and a system control section which generates design data and performs process management on the basis of the generated design data. The system control section searches routes on the basis of spot data groups related to an extracted destination, generates route data on the basis of the search results, the spot data and an input departure time, and manages route guidance on the basis of the generated route data.

## Description

### 1. Technical Field

The present invention relates to the technical field of navigation apparatuses for performing route guidance for mobile units.

### 2. Related Art

In recent years, navigation apparatuses have been generally put to wide use as an apparatus for guiding the movement of mobile units such as vehicles by displaying a map on a display such as a liquid crystal display panel mounted on the mobile unit. Such navigation apparatuses are capable of setting a plurality of destinations and performing a route search and route guidance in an order selected by a user or in increasing order of linear distance from the present position to a final destination.

Also recent navigation apparatuses are capable of storing and holding route data which is set before travel and making a check of a travel route on the basis of the stored data at the time of vehicle travel or recording and holding a travel record and referring to the travel record at the time of the next travel on the same route (see, for example, Japanese Patent No. 3019793).

In the above-described navigation apparatuses, computation of expected arrival times at destinations and a final destination and computation of the distance between two points on the present location and one of the destinations, or a route search between two points on the present location and one of the destinations, is performed. In the above-described navigation apparatuses, however, management of dates and hours, e.g., the data of departure, the date of arrival and the period of a stay at a destination is not performed. Therefore, a day or hour in which route guidance is performed may be different from any of available days and hours including a day and hour recommended for visit to a destination and a non-visitable day/hour. Even if a visit is made to the destination by traveling along a route set by the navigation apparatus, the arrival time is out of open hours of a facility at the destination or out of the season suitable for visit to the destination.

### DISCLOSURE OF THE INVENTION

The present invention has been achieved in consideration of the above-described problem, and an object of the present invention is to provide, for example, a navigation apparatus capable of ensuring that a day and hour in which route guidance is performed coincides with one of available days and hours, and capable of reliably performing route guidance to each of destinations by considering the length of a stay.

The above obj ect of the present invention can be achieved by a navigation apparatus provided with: a departure point data acquisition device which obtains departure point data including at least location data of a departure point from which a mobile unit departs; a registration device which registers a destination to be reached by the mobile unit; a spot data acquisition device which obtains spot data on the registered destination including at least location data indicating the location of the destination, stay length information representing information on an expected stay length at the destination and available time information indicating available dates and times of the destination; a storage device which stores map data; a generation device which generates route data from the departure point to the destination including at least an expected arrival time at the destination on the basis of the obtained departure point data, the spot data on the registered destination and the map data; and a route guidance device which performs route guidance from the departure point to the destination on the basis of the generated route data.

The above obj ect of the present invention can be achieved by a navigation method provided with: a departure point data acquisition process which obtains departure point data including at least location data of a departure point from which a mobile unit departs; a registration process which registers a destination to be reached by the mobile unit; a spot data acquisition process which obtains spot data on the registered destination including at least location data indicating the location of the destination, stay length information representing information on an expected stay length at the destination and available time information indicating available dates and times of the destination; a map data acquisition process which obtains map data stored in a storage device; a generation process which generates route data from the departure point to the destination including at least an expected arrival time at the destination on the basis of the obtained departure point data, the spot data on the registered destination and the map data; and a route guidance process which performs route guidance from the departure point to the destination on the basis of the generated route data.

The above obj ect of the present invention can be achieved by a route data generation program for generating route data relating to route guidance of a mobile unit by a computer. The route data generation program makes the computer function as: a departure point data acquisition. device which obtains departure point data including at least location data of a departure point from which a mobile unit departs; a registration device which registers a destination to be reached by the mobile unit; a spot data acquisition device which obtains spot data on the registered destination including at least location data indicating the location of the destination, stay length information representing information on an expected stay length at the destination and available time information indicating available dates and times of the destination; a map data acquisition device which obtains map data stored in a storage device; a generation device which generates route data from the departure point to the destination including at least an expected arrival time at the destination on the basis of the obtained departure point data, the spot data on the registered destination and the map data; and a route guidance device which performs route guidance from the departure point to the destination on the basis of the generated route data.

The above obj ect of the present invention can be achieved by a server apparatus in a navigation system, the server apparatus provided with: a reception device which receives departure point data including at least location data of a departure point of a mobile unit registered by a terminal device departs, and a destination which is to be reached by the mobile unit; a spot data acquisition device which obtains spot data on the registered destination including at least location data indicating the location of the destination, stay length information representing information on an expected stay length at the destination and available time information indicating available dates and times of the destination; a storage device which stores map data; a generation device which generates route data from the departure point to the destination including at least an expected arrival time at the destination on the basis of the obtained departure point data, the spot data on the registered destination and the map data; and a route guidance control device which controls route guidance in the terminal device from the departure point to the destination on the basis of the generated route data.

### BRIEF DESCRIPTION OF THE DRAWINGS

FIG. 1 is a block diagram schematically showing the configuration of a navigation apparatus according to the present invention;
FIG. 2 is a diagram showing an example of the configuration of spot data stored in a map data storage section in a first embodiment according to the present invention;
FIG. 3A to 3C are diagrams showing an example (I) of on-screen images displayed on a display section in the first embodiment;
FIG. 4A and 4B are diagrams showing an example (II) of on-screen images displayed on the display section in the first embodiment;
FIG. 5 is a block diagram showing the configuration of a system control section in the first embodiment according to the present invention;
FIG. 6 is a diagram showing a sequence of operations (I) in setting start processing in the first embodiment;
FIG. 7 is a diagram showing a sequence of operations (II) in setting start processing in the first embodiment;
FIG. 8 is a flowchart showing operations in generation processing in the first embodiment;
FIG. 9 is a flowchart showing operations in priority processing in the first embodiment;
FIG. 10 is a flowchart showing operations in process management processing in the first embodiment;
FIG. 11 is a flowchart showing operations in early arrival processing in process management processing in the first embodiment;
FIG. 12 is a flowchart showing operations in weather acquisition processing in a second embodiment;
FIG. 13 is a flowchart showing operations in weather management processing in the second embodiment;
FIG. 14 is a flowchart showing operations in rest notification processing in a third embodiment;
FIG. 15 is a diagram for explaining setting of prior placed spot data and posteriorly placed spot data in a fourth embodiment;
FIG. 16 is a flowchart (I) showing operations in generation processing in the fourth embodiment;
FIG. 17 is a flowchart (II) showing operations in generation processing in the fourth embodiment; and
FIG. 18 is a flowchart showing operations in processing on posteriorly placed spot data in the fourth embodiment.

### BEST MODE FOR CARRYING OUT THE INVENTION

Embodiments described below correspond to cases of application of the navigation apparatus according to the present invention to vehicle navigation apparatuses.

### [FIRST EMBODIMENT]

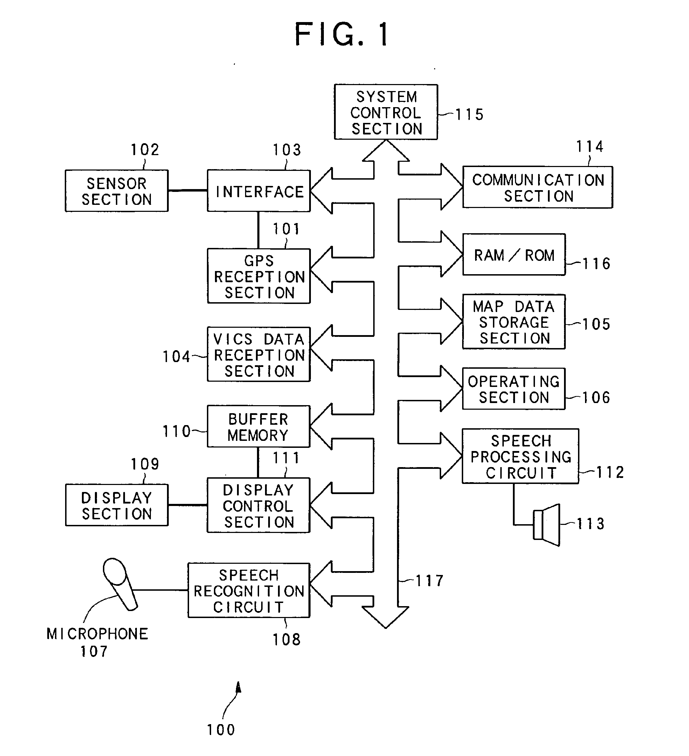

A first embodiment of the navigation apparatus according to the present invention will be described with reference to FIGs. 1 to 11.

Description will first be made of the overall configuration and the outline of the operation of the navigation apparatus in this embodiment with reference to FIG. 1.

FIG. 1 is a block diagram schematically showing the configuration of the navigation apparatus according to the present invention.

As shown in FIG. 1, the navigation apparatus 100 in this embodiment is constituted by a GPS reception section 101 which is connected to an antenna AT not shown in the figure, and which receives GPS (Global Positioning System) data, a sensor section 102 which detects travel data including the travel speed of a vehicle, an interface 103 which computes the position of the vehicle on the basis of GPS data and travel data, a VICS data reception section 104 which receives VICS (Vehicle Information Communication System) data, a map data storage section 105 in which various sorts of data including map data and spot data described below are recorded in advance, an operating section 106 which is used when a user makes a setting and when the user inputs an instruction to the system, a microphone 107 which collects speech sound from the user, a speech recognition circuit 108 which recognizes an instruction provided to the system from the sound collected by the microphone 107, a display section 109 which displays map data and the position of the vehicle, a display control section 111 which controls the display 109 by using a buffer memory 110, a speech processing circuit 112 which generates speeches including a route guidance speech, a speaker 113 which radiates a speech signal output from the speech processing circuit 112, a communication section 114 which performs communication via a public telephone network circuit or an Internet circuit and the antenna AT, a system control section 115 which generates a route search process and a route guidance process, performs process management in route guidance, and performs control for route guidance by controlling the entire system, and a ROM/RAM 116. The system control section 115 is connected to each of the other sections by a bus 117.

For example, the GPS reception section 101 and the sensor section 102 in this embodiment constitute the present position data acquisition device in accordance with the present invention, and the map data storage section 105 in this embodiment constitutes the storage device in accordance with the present invention.

Also, for example, the operating section 106 and the speech recognition circuit 108 in this embodiment constitute a registration device, a selection device, a time setting device and a regeneration selection device in accordance with the present invention, and the display section 109 and the speech processing circuit 112 in this embodiment constitute a notification device, a resetting notification device and a proposition device in accordance with the present invention.

Further, for example, the system control section 115 in this embodiment constitutes the route guidance device in accordance with the present invention.

The GPS reception section 101 receives navigation radio waves from a plurality of artificial satellites belonging to the GPS through the antenna AT, computes pseudo coordinate values of the present position of the mobile unit on the basis of the received radio waves, and outputs the computed values as GPS data to the interface 103.

The sensor section 102 detects travel data including the vehicle travel speed, acceleration and azimuth, and outputs the detected travel data to the interface 103.

More specifically, the sensor section 102 detects the travel speed of the vehicle, converts the detected speed into speed data in a pulse or voltage form, and outputs the speed data to the interface 103.

Also, the sensor section 102 detects the state of movement of the vehicle in a vertical direction by comparing the gravitational acceleration and the acceleration caused by a movement of the vehicle, converts acceleration data representing the detected state of movement into data in a pulse or voltage form, and outputs the converted data to the interface 103.

Further, the sensor section 102 is constituted by a so-called gyrosensor, detects the azimuth of the vehicle, i. e. , the direction in which the vehicle travels, converts the detected azimuth into azimuth data in a pulse or voltage form, and outputs the azimuth data to the interface 103.

The interface 103 performs interfacing between the sensor section 102 and the system control section 115 and between the GPS reception section 101 and the system control section 105. The interface 103 computes the position of the vehicle on the basis of input GPS data and travel data, and outputs the vehicle position as vehicle position data to the system control section 115.

This vehicle position data is collated with map data in the system control section 115 to execute map matching processing or the like.

The VICS data reception section 104 obtains VICS data by receiving electric waves of FM multiplexed broadcast or the like, and outputs the obtained VICS data to the system control section 115.

VICS denotes a road traffic information communication system and the VICS data refers to road traffic information including information on traffic jams, accidents and regulations.

The map data storage section 105 is constituted by a hard disc for example. The map data storage section 105 reads out map data such as a road map recorded in advance, spot data about destinations to be registered, described below, other sorts of information necessary for travel guidance (hereinafter referred to as "map data, etc.") and outputs the read map data, etc., to the system control section 115.

As the map data, etc., map data including road configuration data necessary for navigation operations are stored and names of destinations such as parks and stores and various related data such as location data are also stored by being associated with the map configuration data. Also, the entire map is divided into a plurality of blocks in a mesh form, and map data corresponding to each block is managed as a block map data.

More specifically, in the map data storage section 105, spot data representing destinations such as stores, amusement facilities, noted sightseeing spots and art galleries is stored together with name data such as names of the facilities or names of places where the facilities are located.

The spot data stored in the map data storage section 105 in this embodiment will be described below in detail.

The operating section 106 is constituted by a remote control device or the like including a number of keys such as various check buttons, selection buttons and numeric keys. In particular, the operating section 106 is used to input instructions from the driver, e.g., an instruction to display vehicle travel information and an instruction to change a display on the display section 109.

In particular, the operating section 106 is capable of performing each operation by being linked to the display section 109 when a destination is registered in the system control section 115 in a route guidance process described below, or when process management on the process is performed during route guidance on the basis of the registered destination.

The operating section 106 is also capable of setting information on each of groups of spot data item stored in the map data storage section and setting stay length information and genre information described below.

To the speech recognition circuit 108, a speech or the like uttered by the user and input to the microphone 107 is input. For example, the speech recognition circuit 108 analyzes an uttered speech input as a command to operate the navigation apparatus 100 and outputs an analysis result to the system control section 115.

The display section 109 is constituted by a CRT or a liquid crystal display device for example. The display section 109 displays map data, etc., in various forms under the control of the display control section 111, and displays various conditions necessary for route guidance, including the vehicle position, by superimposing them on the map data, etc.

The display section 109 also displays contents information or the like other than map data, etc., and, at the time of generation of a route guidance process described below, a menu frame for a route guidance process, a destination search method selection frame, a list of destinations stored in the map data storage section 105, and a result frame showing results of the generated route guidance process. The display section 109 displays each frame under display control according to an instruction from the system control section 115.

The frames displayed on the display section 109 in this embodiment will be described below in detail.

Map data, etc., input through the system control section 115 is input to the display control section 111. The display control section 111 generates display data to be displayed on the display section 109, such as described above, according to instructions from the system control section 115, temporarily stores the display data in the buffer memory 110, reads out the display data from the buffer memory 110 at a predetermined time, and outputs the display data to the display section 109.

The speech processing circuit 112 generates a speech signal according to an instruction from the system control section 115 and radiates the generated speech signal through the speaker 113. For example, the speech processing circuit 112 outputs, as a speech signal to the speaker 113, information about route guidance including the direction of travel of the vehicle at the next intersection, jam information to be notified directly to the driver in travel guidance, traffic suspension information, or the like.

At the time of generation of design data described below or route guidance based on selected route data described below in particular, the speech processing circuit 112 outputs information on the generation or route guidance as a speech signal to the speaker 113.

The communication section 114 is connected to the public telephone network circuit and the Internet circuit through the antenna AT. In particular, in this embodiment, a desired server apparatus is connected to the circuit to obtain weather forecast information when a route guidance process described below is generated.

Processing for obtaining weather forecast information in the communication section 114 in this embodiment will be described below in detail.

The system control section 115 includes various input/output ports including a GPS reception port, a key input port and a display control port, and performs overall control of general functions for navigation processing.

The system control section 115 controls the overall operation of the navigation apparatus 100, executes each kind of processing by reading out a control program stored in the ROM/RAM 116, and performs control for route guidance while temporarily storing in the ROM/RAM 116 data which is being processed.

For example, the system control section 115 makes a search for a route from the present location to an input destination and performs route guidance on the route thereby found. When the system control section 115 performs route guidance on a route found by a search, it performs correction processing such as map matching based on vehicle position data output from the interface 103 andmapdata, controls the display section 109 so that route guide information is displayed on a map showing a peripheral region including the present position of the vehicle, and makes the speech processing circuit 112 output the travel route guidance information or the like as a speech.

Also, the system control section 115 registers a plurality of destinations according to an instruction from the user, and generates a route guidance process based on the registered destinations and presents the generated process to the user before performing route guidance. If the user chooses performing route guidance on the basis of data on the generated route guidance process (hereinafter referred to simply as "design data"), the system control section 115 performs process management on route guidance while performing route guidance on the basis of the selected design data (hereinafter referred to as "selected route data").

Generation of design data and route guidance management based on the design data in the system control section 115 in this embodiment will be described below in detail.

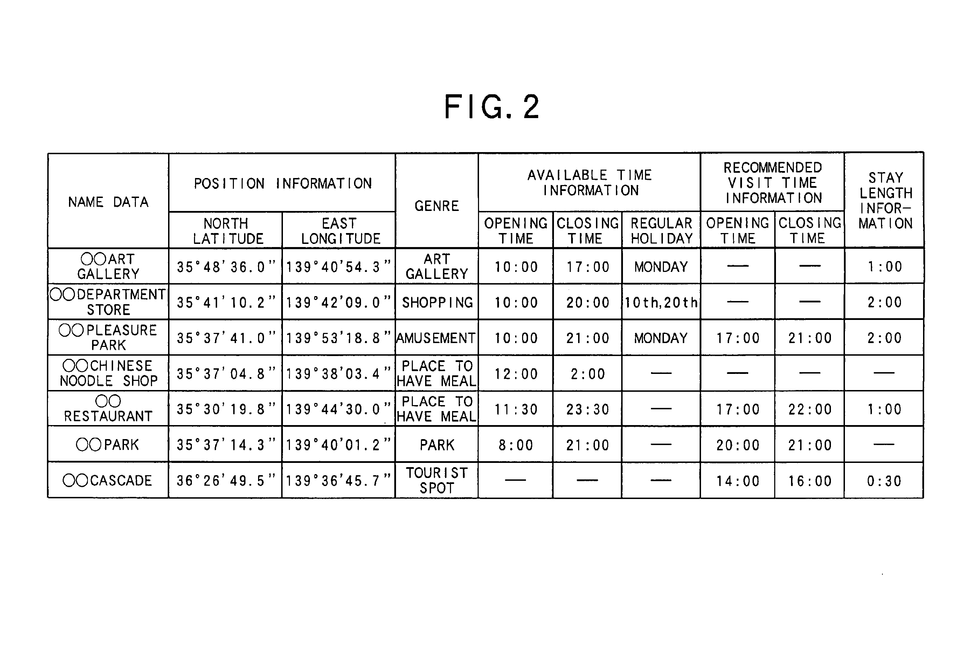

Description will next be made of spot data stored in the map data storage section 105 in this embodiment with reference to FIG. 2.

FIG. 2 shows an example of the configuration of spot data stored in the map data storage section 105 in this embodiment.

In the map data storage section 105 are stored map data and data other than the map data, e. g. , spot data representing places to be selected as destinations, including restaurants, stores such as department stores, ball game grounds, parks or amusement parks, noted sightseeing spots, and art galleries or museums, as described above. For example, such sorts of information are stored together with names of facilities and names of places where the facilities are located are as shown in FIG. 2.

For example, in this embodiment, spot data includes position information indicating the latitudes and longitudes of such spots, genre information indicating categories for places to visit, such as places to have meals, places to visit for study or observation, and amusement facilities, to which the spots belong, available time information indicating times such as service times and open times during which the facilities at the destinations are available, recommended visit time information indicating recommended days and hours in which a visit should be made, e.g., a time period during which a night view is beautiful and a period which is the set time to see cherry blossoms, and stay length information indicating an expected length of time for stay at each spot. This spot data is stored in a state of being associated with the corresponding positions on the map and the names of the destinations.

More specifically, genre information indicates genres for, for example, places to have meals, stores other than the places to have meals, play spots, places to visit for study or observation and sightseeing places. When design data on a route guidance process is generated and when the generated design data is presented, the genre information is referred to by the system control section 115 and is displayed on the display section 109.

Also, genre information is used for determination of a stay length expected with respect to a registered destination at the time of generation of design data as described below, if the spot data on the registered destination includes no stay length information. In this embodiment, typically a value for a stay length is set in advance as stay length information in each group of spot data by the user. However, if no expected stay length is set in this manner in the spot data, an expected stay length determined in advance with respect to each genre, for example, one hour as an expected length of stay at a place to have a meal, thirty minutes at a sightseeing place or two hours at an amusement facility is set as a length of time for stay at a destination.

This stay length information may be set in advance with respect to each spot data group. Alternatively, the user may set this stay length information through the operating section 106 with respect to each spot data group.

Each of available time information and recommended visit time information includes information on terms or dates including seasons such as spring, summer, autumn and winter, available times such as open hours, information on the beginnings and ends of recommended time periods in which a visit should be made.

In this embodiment, it is not necessary required that available time information be set in spot data. If spot data having no available time set therein is registered as a destination, design data is generated by assuming that the destination is available for 24 hours over 365 days.

In this embodiment, recommended visit time information is not necessarily limited to information on one recommended time, i. e., information on one point in time or one time period, such as a term, a date, a beginning time or an end time, in data on one spot. A plurality of recommended visit times may be provided in data on one spot.

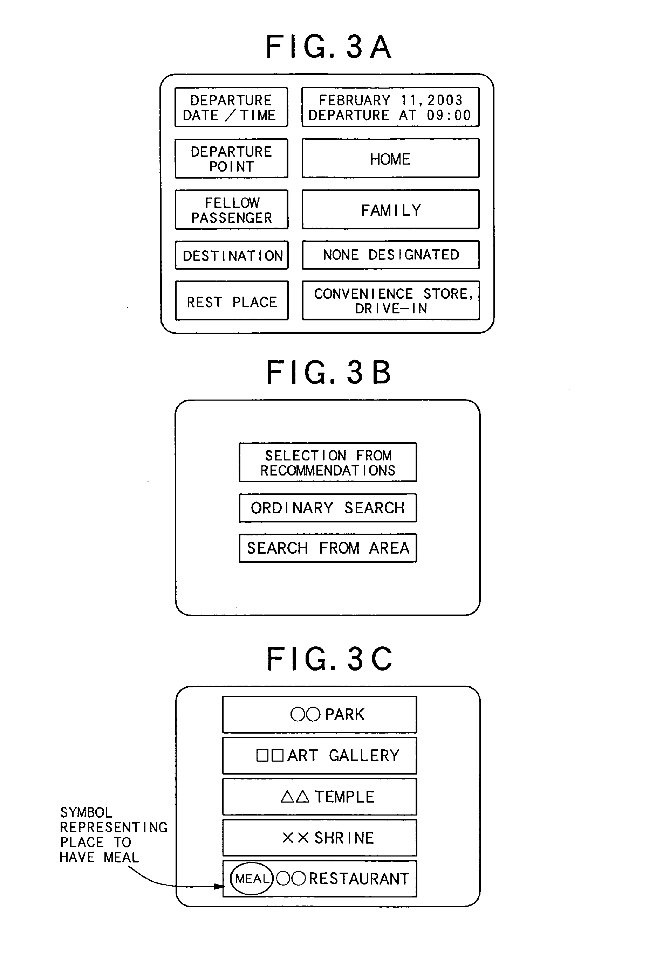

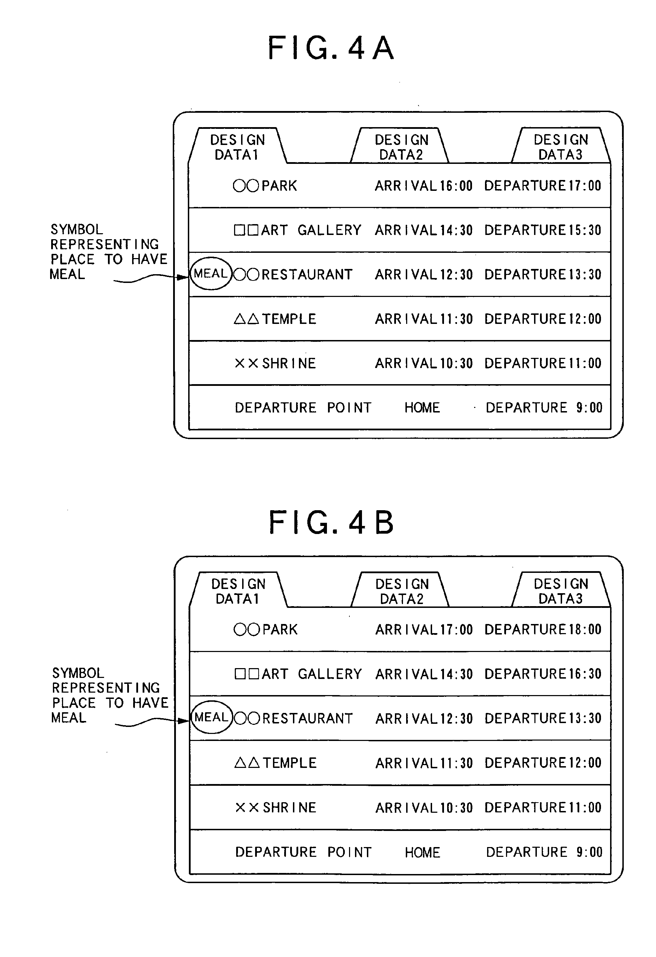

Description will now be made of information displayed on the display section 109 in this embodiment with reference to FIGs. 3 and 4.

FIGs. 3 and 4 show an example of the configurations of frames displayed on the display section 109 in this embodiment.

In this embodiment, to generate a design data, the display section 109 displays a design data menu frame, a destination search method selection frame, a list of spot data representing destinations, and a result frame showing results of design data, as described above.

More specifically, when design data described below is generated according to a user instruction, the display section 109 displays a design data menu frame through which the user is called on to input necessary information for generation of a route guidance process, a selection frame through which a method of registering a destination at the time of registration of the destination is selected, and a list display frame showing a list of registered destinations.

For example, in this embodiment, the display section 109 displays, as shown in FIG. 3A, a menu frame for enabling registration of a departure time, a departure point, fellow passengers, a destination and a rest place by calling on the user to register these information items, and displays registered information items.

In the menu frame shown in FIG. 3A, "None designated" in a destination section signifies that a destination is set by a method described below. A rest place is used separately from a set destination as a destination to which route guidance is performed in each of predetermined time periods, as described below with respect to another embodiment.

The display section 109 also displays, as shown in FIG. 3B, a selection window for selection from an ordinary method of setting a destination to visit by using a postal code number, a telephone number or map data, amethodof setting a destination to visit from regions to visit, and a method setting a destination recommended as a place to visit.

The display section 109 further displays, as shown in FIG. 3C, registered destinations with respect to the above-mentioned genres in a list display frame, and a special mark particularly for a destination in the genre "place to have meal".

The display section 109 also displays design data generated by a route guidance process generation section 123 after generation of below-described design data according to an instruction from the user.

For example, in this embodiment, the display section 109 displays design data generated on the basis of all the registered destinations and displays expected arrival times and expected departure times by associating them to the destinations, as shown in FIG. 4A. If a plurality of groups of design data exist, they are displayed in descending order of priority.

In this embodiment, the system control section 115 obtains weather forecast information with respect to each of destinations when the display section 109 displays the destinations, as described below. The display section 109 displays the obtained weather forecast information in correspondence with the destinations.

If no design data can be generated in some case, e.g., a case where the number of registered destinations is large or a case where only destinations of short available times are registered, the display section 109 displays information that no design data can be generated and the reason for the impossibility of generating any design data.

For example, in a case where there is a destination which cannot be visited, the display section 109 displays information that the destination cannot be visited as well as the other sorts of information, as shown in FIG. 4B, while in this embodiment the display section 109 displays basically in the same manner as in the case of success in generation of the above-described design data.

In this embodiment, in a case where there is a destination which cannot be visited, the display section 109 displays the destination cannot be visited, e.g., a symbol "×" to call on the user to reset and regenerate design data, as described below.

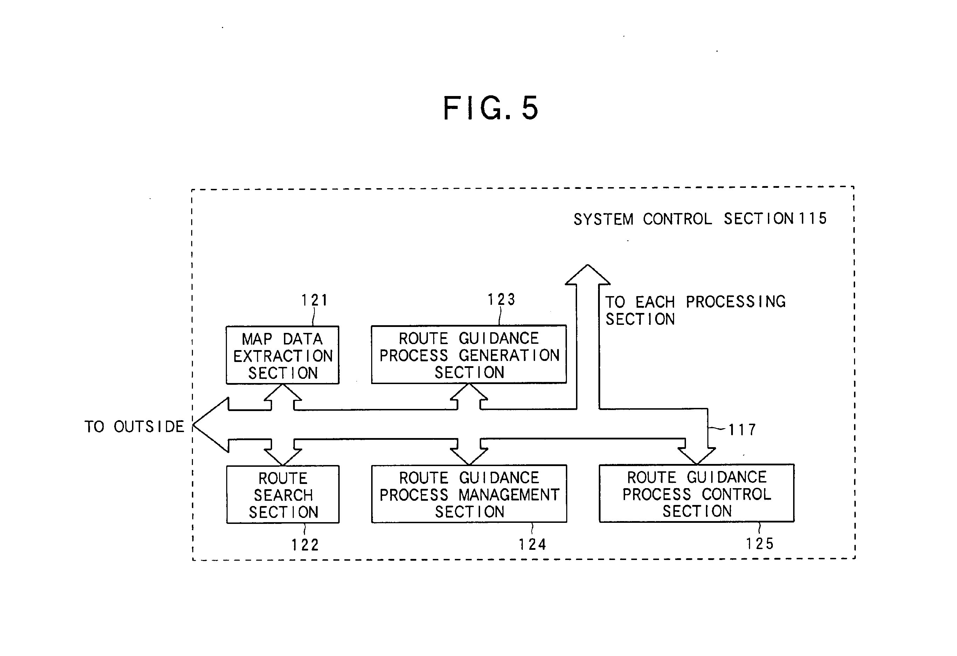

Description will now be made, with reference to FIG. 5, of the system control section 115 that generates design data and performs process management based on the design data.

FIG. 5 is a block diagram showing the configuration of the system control section in this embodiment.

The system control section 115 includes, as sections for generating design data and performing process management based on generated design data, as shown in FIG. 5, a spot data extraction section 122 which extracts, according to a registered destination, spot data on the destination from the map data storage section 105, a route search section 122 which searches routes on the basis of extracted spot data groups, the route guidance process generation section 123 which generates design data on the basis of the results of the route search, the spot data groups and input departure times, a route guidance process management section 124 which manages route guidance on the basis of the generated design data, a route guidance process control section 125 which controls each section with respect to the generation and management of the route guidance process. The sections are connected by a bus 117.

The system control section 144 includes, in addition to the spot data extraction section 121, the route search section 122, the route guidance process generation section 123, the route guidance process management section 124 and the route guidance process control section 125, processing sections which perform control processing including control of the above-described sections, and which are not shown in the figure. The processing sections are connected to the above-described sections and externally connected by the bus 117.

For example, the spot data extraction section 121 constitutes the spot data acquisition device in accordance with the present invention, and the route guidance process generation section 123 constitutes the departure point data acquisition device, the generation device, the determination device, the required time computation device, the route generation device, the data generation device, the expected time computation device, the available time determination device, the stay length determination device, the changed stay length computation device and the priority computation device in accordance with the present invention.

Also, for example, the route guidance process management section 124 in this embodiment constitutes the predicted time computation device, the resetting device, the time difference computation device, the resetting determination device, the route regeneration device, the determination device, the travel time computation device, the distance computation device and the distance determination device in accordance with the present invention.

Further, for example, the route guidance process control section 125 constitutes the detection device and the time setting device in accordance with the present invention.

The spot data extraction section 121 obtains from the map data storage section 105 the spot data group for a destination according to an instruction from the user registered through the operating section 106 and the speech recognition circuit 108, and outputs the obtained spot data to the route guidance process generation section 123.

More specifically, when a destination is registered through the operating section 106, the spot data extraction section 121 searches the map data storage section 105 on the basis of the registered destination, detects the spot data on the destination including the position information, the genre information and the available time information about the destination, and outputs the detected spot data to the route search section and the route guidance process generation section 123.

The spot data extraction section 121 also searches the map data storage section 105 with respect to a destination other than the registered destination and detects the map data on the another destination (hereinafter referred to as "reserve destination". The spot data extraction section 121 stores the thus-detected spot data on destinations in the ROM/RAM 116 on a genre-by-genre basis.

The reserve destination is used in an operation for management of a route guidance process described below. The reserve destination is set in the route guidance process control section 125.

When design data is generated, a vehicle departure time and the position of a departure point registered through the operating section 106 or the speech recognition circuit 108, the spot data on destinations extracted by the spot data extraction section 121 are input to the route search section 122. The route search section 122 searches routes from the departure point to the destinations and routes among the destinations on the basis of the input departure time and departure position and the position information contained in the spot data on the destinations, and outputs search results to the route guidance process generation section 123.

More specifically, the route search section 122 searches routes between all pairs of points on the departure point and the destinations, and outputs the routes between the pairs of points to the route guidance process generation section 123.

To the route search section 122, information on the registered departure date is also input. The route search section 122 obtains traffic information with respect to the input departure date through the communication section 114 and searches routes by considering the traffic information.

In this embodiment, the route search section 122 also performs ordinary route search processing to search a route to one of registered destinations on the basis of vehicle present position data obtained by the GPS reception section 101 and the spot data on the registered destinations while referring to the map information stored in the map data storage section 105. The route search section 122 outputs search results thereby found to the display section 109 and other necessary sections.

When design data is generated, a vehicle departure time registered through the operating section 106 or the speech recognition circuit 108, the spot data on destinations extracted by the spot data extraction section 121 and data on routes between the departure point and the destinations and routes between the destinations are input to the route guidance process generation section 123. The route guidance process generation section 123 generates design data on a route extending from the departure point to one destination to another by referring to the departure time and stay length information and available date/hour information contained in the spot data, and outputs the design data to the display section 109 and the speech processing circuit 112.

When the route guidance process generation section 123 generates design data, it determines, with respect to each destination, whether or not the visit time and the length of stay at the destination are contained in the available time indicated by the available time information. If the visit time and the stay length are contained in the available time of the destination, the route guidance process generation section 123 outputs the corresponding route found by searching to each section. If the visit time and the stay length are not contained in the available time of the destination, the route guidance process generation section 123 discards the design data.

In this embodiment, design data generated by the route guidance process generation section 123 contains time information indicating an arrival time, a departure time and a stay length with respect to each of destinations. The design data is generated in a form containing these time information items.

The generation of design data in the route guidance process generation section 123 in this embodiment will be described below in detail.

When one design data group generated as described above is selected by the user, the route guidance process management section 124 performs processing for route guidance (hereinafter referred to as "route guidance processing") on the basis of the selected design data.

More specifically, the route guidance process management section 124 makes a determination as to whether or not the expected arrival time and the expected departure time of the destination which is not yet visited on the basis of the vehicle present position data computed by the GPS reception section 101 (hereinafter referred to as "unvisited destination") are contained in the available time in the spot data on the destination, aside from management of expected arrival times and expected departure times with respect to destinations in a selected route guidance process, andnotifies the results of this determination to the user through the display section 109 or the speaker 113.

The following description of this embodiment is made by referring to an expected arrival time and an expected departure time of an unvisited destination computed in the route guidance process management section 124 as "predicted arrival time" and "predicted departure time" for discrimination from expected arrival times and expected departure times of the destinations registered in selected route data.

The route guidance process management section 124 regenerates the route guidance process in the selected route data according to an instruction from the user with respect to the determination result, notifies regenerated design data (hereinafter referred to as "redesign data") to the user through the display section 109 and the speaker 113, and changes the route data used as a basis for route guidance from the design data to the redesign data according to the instructions from the user.

When the route guidance process management section 124 redesigns the route guidance process, it generates redesign data by controlling the route search section 122 and the map data storage section 105. The generation of redesign data in the route guidance process management section 124 will be described below in detail.

The route guidance process control section 125 controls the above-described sections for generation of design data in a route guidance process or for management of a route guidance process executed on the basis of selected route data. The route guidance process control section 125 controls the display section 109, the operating section 106 and the communication system 114 through the system control section 115 to register necessary data at the time of acquisition of weather information described below and at the time of generation of design data or management of a route guidance process in particular.

More specifically, the route guidance process control section 125 enables rest time intervals, rest places and genre information about the rest places to be registered through the operating section 106 when design data is generated. When route guidance is performed on the basis of selected route data, the route guidance process control section 125 notifies the user that a rest will be taken at the rest time intervals and of places to take the rest through the display section 109 and the speaker 113.

Also, the above-described reserve destination is set in the route guidance process control section 125. The route guidance process control section 125 obtains the spot data on the reserve destination set in the spot data extraction section 121.

More specifically, in a case where a destination is set by the ordinary method, the route guidance process control section 125 sets as a reserve destination a destination existing in a certain distance range from the registered destination, as described above. In a case where a destination is registered by the method of setting a destination to visit from a region to visit, and in a case where a destination is registered by the method of setting a destination recommended as a destination to visit, the route guidance process control section 125 sets as a reserve destination a destination not registered or selected, and stores the spot data on these destinations in the ROM/RAM 116, as described above.

In a case where a destination is registered, for example, by the method of setting a destination to visit from a region to visit, and in a case where the user registers a destination by the method of setting a destination recommended as a destination to visit, the route guidance process generation section 123 generates a list of destinations which are located in a destination area or within a certain distance range from the registered destination (hereinafter referred to as "prioritized destination list") on the basis of a destination condition input by the user and information attributes of destinations stored in advance.

Also, the route guidance process generation section 123 presents this prioritized destination list to the user to enable the user to register one of the destinations. One of the destinations not registered from this prioritized destination list is set as a reserve destination.

Processing for generating design data (hereinafter referred to as "generation processing") in the route guidance process generation section 123 will now be described.

As described above, the route guidance process generation section 123 generates design data on a route extending from a departure point to one destination to another on the basis of a vehicle departure time, spot data on destinations and route data while referring to stay length information and available date/hour information contained in the spot data.

More specifically, the route guidance process generation section 123 computes the required times between pairs of points in routes between the departure point and destinations registered and routes between the destinations on the basis of the results of searches between all the pairs of points on the departure point and the destinations, and generates a plurality of design data groups by using combinations of the routes and the required times between the pairs of points.

When the route guidance process generation section 123 generates a plurality of design data groups, it generates a route guidance process by determining, with respect to each of the destinations, whether or not the time to visit the destination and the length of time for stay at the destination are contained in the available time and the recommended visit time.

For example, in this embodiment, if three destinations respectively located at points A, B, and C are registered, the route guidance process generation section 123 computes a route between the departure point and point A, point B or point C and the time required for this route, a route between point A and point B or point C and the time required for this route, and a route between point B and point C and the time required for this route, and combines the computed routes and required times between the points to generate route data which can be a candidate for a plurality of routes extending via the destinations.

In principle, in this embodiment, route data on ten route guidance process of short required times in the entire route data is computed as design data on the basis of the required times in the route data and the stay lengths indicated by the stay length information for destinations.

When the route guidance process generation section 123 generates route data groups, it arranges destinations in the order of the generated route data and determines, with respect to each destination, whether or not the expected arrival time at the destination and the expected departure time are contained in the available time of the destination included in the spot data on the destination, on the basis of the required times between the destinations and the information on the stay lengths at the destinations. If the expected arrival time and the expected departure time are not contained in the available time of the destination, the route guidance process generation section 123 discards the design data, and outputs only the design data having the expected arrival times and the expected departure times contained in the available times of the destinations as generated design data to each section.

If no available time information is contained in the map data on a registered destination, design data is generated by assuming that the destination is available for 24 hours over 365 days, as mentioned above.

If recommended visit time information is contained in the spot data on one destination, the route guidance process generation section 123 determines whether or not in generated design data the time to visit the destination and the expected stay length associated with the recommended visit time information coincide with the recommended destination visit time. The route guidance process generation section 123 increases the priority with which the design data having the visit time and the stay length coinciding with the recommended visit time is presented to the user.

Processing for setting the priority with which design data is presented to the user (hereinafter referred to as "order processing") will be described below in detail.

If genre information indicating the genre "place to have meal" is provided in the spot data on a registered destination as described above, the route guidance process generation section 123 generates route guidance process generation data by considering a mealtime.

More specifically, in a case where genre information indicating the genre "place to have meal" is included in the spot data on a registered destination as described above, the route guidance process generation section 123 generates route guidance process generation data such that the destination is visited in a meal time.

For example, in a case where a restaurant selected as desired is registered as a destination and where the expected length of stay at the restaurant is one hour, the route guidance process generation section 123 discards design data in which the time for the corresponding destination is not scheduled as a restaurant for a lunch time from eleven to fourteen or an evening dinner time from nineteen to twenty-one, and outputs only design data in which the corresponding destination is scheduled for the set meal time as generated design data to each section.

In this embodiment, a mealtime is set in processing for generation of each design data, or set in advance as a specified value by the user.

In this embodiment, the route guidance process generation section 123 performs order processing on the basis of a meal time when generating design data in the same manner as in the above. This order processing will be described bellow in detail.

When the route guidance process generation section 123 generates design data, it also obtains information on a weather forecast (hereinafter referred to as "weather forecast information") at the time of stay at a registered destination from a server apparatus selected as desired through the communication section 114, and incorporates the obtained weather forecast information for each destination in design data.

In this embodiment, weather forecast information is thus incorporated for each destination in design data, thereby enabling the weather forecast at the time of a user's visit to the destination to be displayed on the display section 109 when the design data is displayed on the display section 109.

Thus, in this embodiment, design data is generated on the basis of registered destinations and the generated design data is provided to the user through the display section 109 for example.

Description will now be made of priority processing for setting priorities in the route guidance process generation section 123.

When the route guidance process generation section 123 generates design data, it computes priorities for design data groups and presents the design data groups to the user according to the computed priorities. In this embodiment, for this computation of priorities, degrees of priority set in advance as numeric values and the time required for the entire process in each design data group are used.

More specifically, the route guidance process generation section 123 computes a degree of priority for each design data group on the basis of recommended visit time information and a meal time, and sets a presentation order in which the design data groups are presented to the user on the basis of the total degree of priority computed for each design data group and the time required for the entire process.

In this embodiment, when the route guidance process generation section 123 generates design data groups, it determines priorities on the basis of the computed times required for the entire processes and rearranges the priorities for the design data groups if the required time in any one of the design data group is included in a certain range set in advance from the required time in another of the design data groups higher in priority rank in terms of required time, and if the difference between the degrees of priority for the design data groups is within a predetermined range.

In this embodiment, each time the route guidance process generation section 123 generates one design data group, it determines whether or not the arrival time at one destination and the departure time from the destination meets the recommended visit time included in the spot data on the destination, whether or not a place to have a meal is scheduled for a meal time set in advance in the generated design data, and whether or not there is a match between weather information about any destination and weather forecast information obtained via the communication section 114 with respect to the arrival time at the destination and the departure time from the destination. If each destination in the design data meets the recommended visit time, or if a place to have a meal is scheduled for the meal time set in advance in the generated design data, the route guidance process generation section 123 computes the total degree of priority for the design data by adding a degree of priority set in advance.

More specifically, in this embodiment, the route guidance process generation section 123 arranges route guidance process design data groups generated without discarding data in increasing order of time required for the entire process, and determines whether or not the expected arrival time at any one of the destinations set in one of the design data groups and the expected departure time from the destination are contained in a recommended visit time for the destination set in the design data group. If one of the destinations in one design data group meets the recommended visit time, the route guidance process generation section 123 increases the priority only for the destination meeting the recommended visit time.

In this embodiment, the time required for the entire process in each design data group is computed as a required time from the departure point to the final destination.

Description will now be made of processing for process management (hereinafter referred to as "process management processing") based on selected route data in the route guidance process management section 124 in this embodiment.

The route guidance process management section 124 performs process management processing on a route generated on the basis of selected route data and expected arrival times at destinations and expected departure times from the destinations, as mentioned above. When the route guidance process management section 124 redesigns the route guidance process due to a delay in arrival from the expected arrival time at one destination and a delay in departure from the expected departure time or an earlier arrival at the destination, it generates redesign data by controlling the route guidanceprocess generation section 123, the route search section 122 and the map data storage section 105 through the route guidance process control section 125.

More specifically, the route guidance process management section 124 determines, at time intervals set in advance, with respect to each destination set in the selected route data, whether or not a delay equal to or larger than a predetermined time from the expected arrival time set in the selected route data or earlier arrival will occur. If a delay from the expected arrival time or earlier arrival at the destination will occur, the route guidance process management section 124 presents to the user information that the delay or earlier arrival will occur, and redesigns the route guidance process, that is, generates redesign data according to an instruction from the user.

In this embodiment, if the route guidance process management section 124 determines that arrival will occur at or before a time earlier by a predetermined time than the expected arrival time set in the selected route data, it notifies that earlier arrival at the destination to visit will occur through the display section 109 or the speaker 113, changes the position of the destination at which earlier arrival will occur and the position of another destination in visit order with each other or newly sets a destination before or after the destination at which earlier arrival will occur, and newly designs a route guidance process on the basis of the change of the destinations or setting of the new destination according to a presupposed instruction from the user. The route guidance process management section 124 presents the generated route guidance process, i.e., redesign data, to the user through the display section 109 or the speaker 113.

Also, if the route guidance process management section 124 determines that a delay equal to or larger than a predetermined time from the expected arrival time set in the selected route data will occur, it notifies that a delay in arrival at the destination to visit will occur through the display section 109 or the speaker 113, changes the position of the destination at which the delay will occur and the position of another destination in visit order with each other or removes the destination at which the delay will occur, and newly designs a route guidance process on the basis of the change of the destinations or removal of the destination according to a presupposed instruction from the user. The route guidance process management section 124 presents the generated route guidance process, i.e., redesign data, to the user through the display section 109 or the speaker 113.

In this embodiment, when the route guidance process management section 124 performs redesigning, it controls the map data extraction section 121, the route search section 122 and the route guidance process generation section 123 in the above-describedmanner to obtain spot data on a new destination, compute a route between two points on the new destination and one of the unvisited destinations, and generate route guidance process design data on the basis of the spot data, the route between the two points and the time required in the route as described above.

Further, during route guidance based on selected route data, the route guidance process management section 124 continuously computes a lapse of time, and notifies the user that rests will be taken at the rest time intervals and of the places where rests will be taken through the display section 109 and the speaker 113 on the basis of the rest time intervals and the rest places or genre information on the rest places registered at the time of generation of the design data on the route guidance process.

For example, in a case where rest time intervals of "two hours" and a rest place genre "convenience store" are registered when design data is generated by the route guidance process generation section, the route guidance process management section 124 notifies the user that a rest will be taken and of the rest place through the display section 109 and the speaker 113 when the continuous travel time that has elapsed after the start of route guidance or the departure from one destination and a restart of route guidance becomes equal to two hours.

In this embodiment, the time period set in advance is set to two hours in a case where no rest time periods or no rest places are registered when design data is generated.

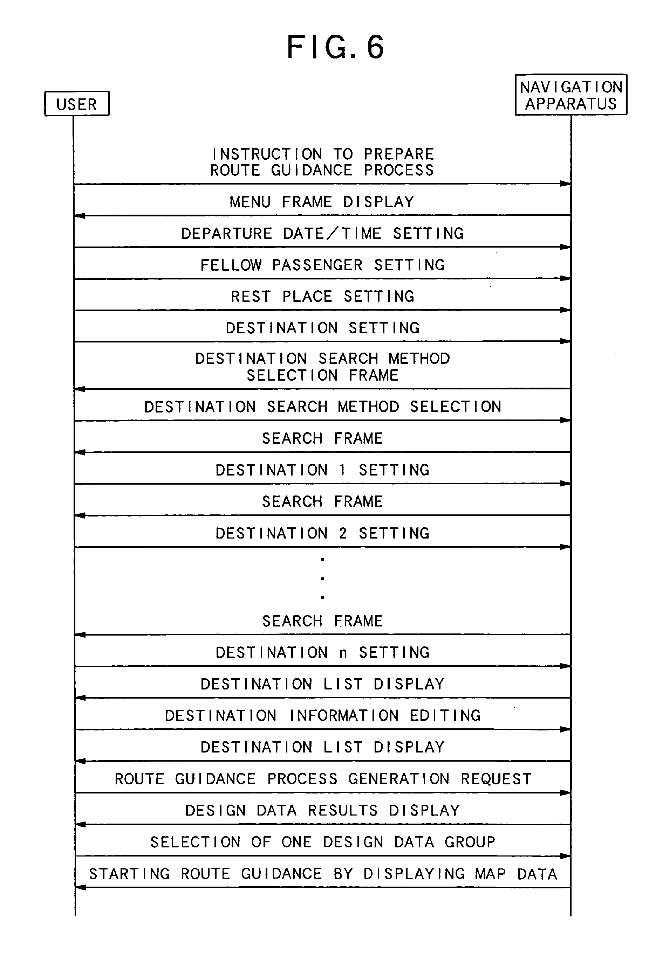

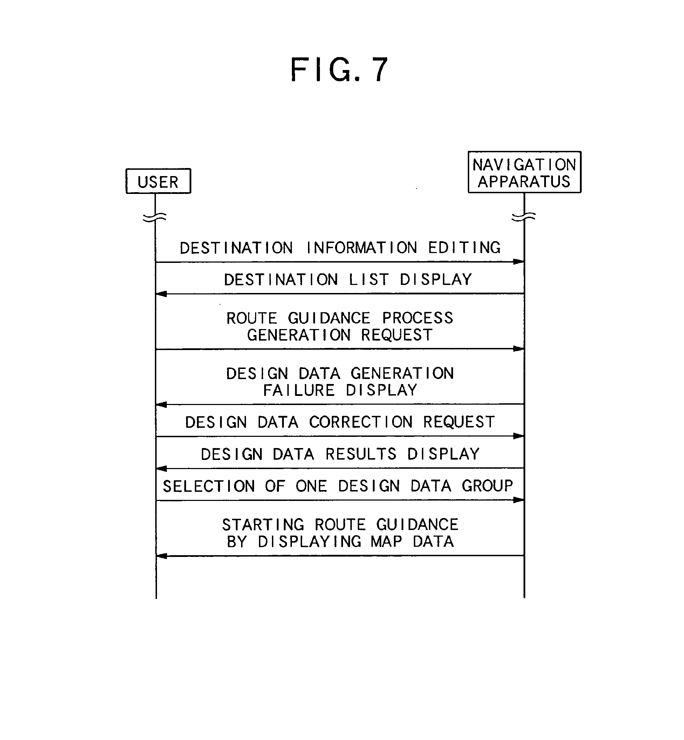

Description will now be made of operations in processing for initiating route guidance (hereinafter referred to as "setting start processing") on the basis of design data in this embodiment with reference to FIGs. 6 and 7.

FIGs. 6 and 7 are flowcharts showing operations in setting start processing in this embodiment.

When the user registers an instruction to prepare a route guidance process in the route guidance process control section 125 provided in the system control section 115 through the operating section 106, the route guidance process control section 125 controls the display control section 111 in generation of the route guidance process to display on the display section 109 the menu frame through which the user is called on to input necessary information, and in which the information is displayed, as described above.

Subsequently, when the menu frame is displayed, and when the user registers information for initiation of destination setting in the route guidance process control section 125 by setting a departure date/time, fellow passengers and rest places through the operating section 106 while referring to the menu frame displayed on the display section 109, the route guidance process control section 125 controls the display control section 111 to display the selection frame in which the selection methods for setting destinations are shown, as described above.

At this time, the route guidance process generation section obtains weather forecast information about set destinations through the communication section 114 and notifies the user of the weather forecast information by relating this information to the destinations at the time of notification of design data to the user.

Subsequently, when the selection frame is displayed, and when the user selects one selection menu through the operating section 106 while referring to the selection frame displayed on the display section 109, the route guidance process control section 125 makes the display section 109 display the search frame for registration of destinations.

Subsequently, when the search frame is displayed, and when the user selects destinations while referring to the search frame displayed on the display section 109, the route guidance process control section 125 registers the selected destinations in the ROM/RAM 116 and again displays the search frame on the display section 109 before a destination setting termination operation is performed.

Subsequently, when the user inputs an instruction to display a list of all of the registered destinations, i.e., an instruction to initiate editing of the destination information to the route guidance process control section 125 through the operating section 106, the route guidance process control section 125 displays the list of the registered destinations on the display section 109, as described above.

Subsequently, when the user inputs an instruction to generate a route guidance process to the route guidance process control section 125 through the operating section 106, the route guidance process control section 125 conducts generation of design data on the basis of the destinations registered as described above, and determines whether or not some design data can be generated. In a case where some design data can be generated, the route guidance process control section 125 makes the display section 109 display generated design data. In a case where no design data can be generated, the route guidance process control section 125 makes the display section 109 display design data with an indication of a non-visitable destination.

Design data generation processing operations in this processing in this embodiment will be described below in detail.

In a case where the route guidance process control section 125 can generate some design data, the route guidance process control section 125 initiates route guidance on the basis of one selected design data group, on condition that the one design data group is selected by the user.

On the other hand, as shown in FIG. 7, in a case where the route guidance process control section 125 can generate no design data, the route guidance process control section 125 makes the display section 109 display to the user information that design data will be corrected.

Subsequently, when the user inputs an instruction to correct the design data, the route guidance process control section 125 again conducts generation of design data on the basis of information on the correction and the destinations registered as described above, and determines whether or not some design data can be generated.

If the route guidance process control section 125 determines that some design data can be generated on the basis of the corrected destinations, it initiates route guidance on the basis of one selected design data group, on condition that the one design data group is selected by the user, as it does in the above-described case.

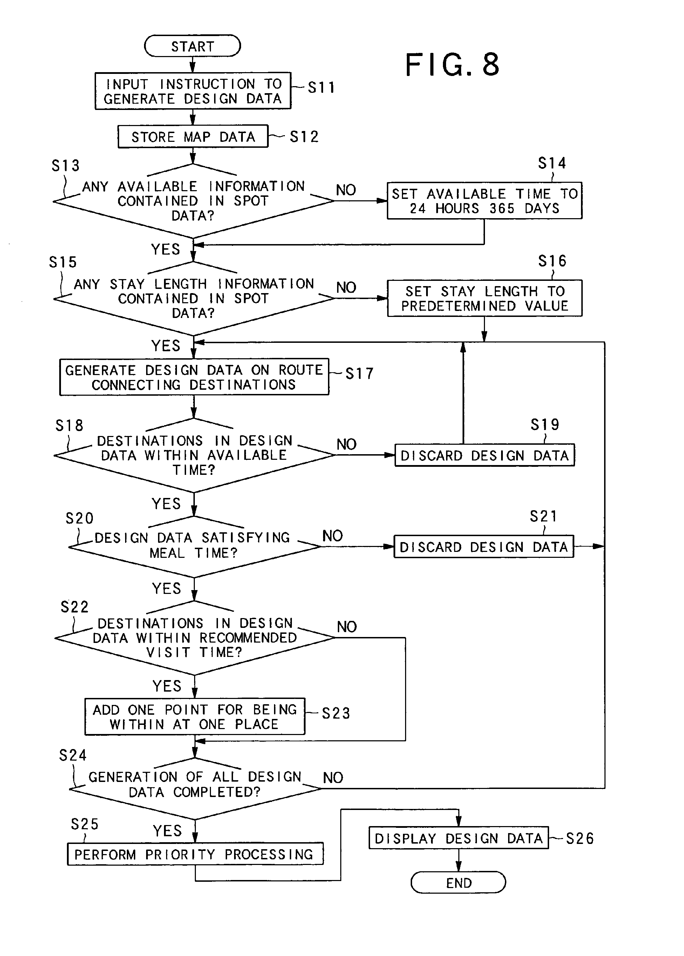

Description will now be made of operations in design data generation processing in this embodiment with reference to FIG. 8.

FIG. 8 is a flowchart showing operations in generation processing in this embodiment.

It is assumed with respect to this embodiment that a destination having genre information about a place to have a meal is necessarily set in advance, and that twenty design data groups are computed in the route guidance process generation section 123.

First, the user inputs an instruction to generate design data on the basis of registered destination data to the route guidance process control section 125 through the operating section 106 (step S11). The route guidance process control section 125 makes the spot data extraction section 121 extract spot data groups and store information in the spot data groups in the ROM/RAM 116 (step S12).

As described above, the route guidance process control section 125 also sets a reserve destination by use of the route guidance process generation section 123, and stores in the ROM/RAM 116 information items in the spot data on the reserve destination extracted by the map data extraction section 121.

Subsequently, the route guidance process control section 125 makes the route guidance process generation section 123 determine whether or not available time information is contained in each registered spot data group (step S13). If available time information is contained in each spot data group, an advance to processing in the next step S15 is made. If no available time information is contained in one of the spot data groups, the route guidance process control section 125 makes a setting such that the available time of the destination is 24 hours over 356 days, and stores the setting in the ROM/RAM 116 (step S14).

Subsequently, the route guidance process control section 125 makes the route guidance process generation section 123 determine whether or not stay length information is contained in each registered spot data group (step S15). If stay length information is contained in each spot data group, an advance to processing in the next step S17 is made. If no stay length information is contained in one of the spot data groups, the route guidance process control section 125 obtains genre information about the corresponding destination, sets an expected stay length set in advance in correspondence with the genre as an expected time of stay at the destination, and stores the expected stay length in the ROM/RAM 116 (step S16).

Subsequently, the route guidance process control section 125 generates, in the route guidance process generation section 123, at least one group of design data on a route extending via the destinations by combining routes between two points on the departure point and the destinations and the corresponding required times (step S17), as described above. After, generation of each design data group, operations described below are performed.

The route guidance process control section 125 first makes the route guidance process generation section 123 determine, on the basis of available time information in the spot data on the destinations in the generated design data, whether or not the arrival time at one of the destinations in the generated design data and the departure time from the destination are contained in the available time in the spot data on the destination (step S18).

If, with respect to at least one of the destinations, the route guidance process generation section 123 determines that the arrival time and the departure time are not contained in the available time in the spot data on the destination, the route guidance process control section 125 makes the route guidance process generation section 123 discard the generated design data (step S19), andmakes a move to step S17 to generate the next design data.

If, with respect to all the destinations in the generated design data, the route guidance process generation section 123 determines that the arrival time at the destination and the departure time from the destination are contained in the available time in the spot data on the destination, the route guidance process control section 125 makes the route guidance process generation section 123 determine whether or not the arrival time at one of the destinations having genre information indicating a place to have a meal and the departure time from the destination are contained in the meal time set in advance (step S20).

If the route guidance process generation section 123 determines, with respect to the destination set as a place to have a meal in the generated design data, that the arrival time at the destination and the departure time from the destination are not contained in the meal time set in advance, the route guidance process control section 125 makes the route guidance process generation section 123 discard the generated design data (step S21) and makes a move to step S17 to generate the next design data.

If the route guidance process generation section 123 determines, with respect to the destination set as a place to have a meal in the generated design data, that the arrival time at the destination and the departure time from the destination are contained in the meal time set in advance, the route guidance process control section 125 makes the route guidance process generation section 123 compute a degree of priority for the generated design data on the basis of recommended visit time information in the spot data on the destinations in the generated design data (steps S22, S23), as described above.

More specifically, the route guidance process generation section 123 computes to determine, with respect to each destination in the generated design data, whether or not the arrival time at the destination in the generated design data and the departure time from the destination are contained in the recommended visit time in the spot data on the destination (step S22). If the arrival time at the destination and the departure time from the destination are not contained in the recommended visit information on the destination, a move to processing specified in step S24 is made without performing any particular processing. Each time the arrival time at one of the destinations in one design data group and the departure time from the destination are contained in the recommended visit time, one priority point is added. The result of addition computed with respect to all the destinations in the design data group is obtained as the degree of priority (step S23).

Subsequently, the route guidance process control section 125makes the route guidance process generation section 123 determine whether or not all the design data groups have been generated (step S24). If the generation of all the design data groups has not been completed, a move to step S17 is made.

If the route guidance process generation section 123 determines that all the design data groups have been generated, the route guidance process control section 125 makes the route guidance process generation section 123 perform the above-describedpriorityprocessing on the basis of the degrees of priority (step S25), and makes the display section 109 display the design data groups in descending order of priority via the route guidance process control section 125 (step S26). Generation processing then ends.

Operations in priority processing in the generation section in this route guidance process will be described below in detail.

Thus, in this embodiment, at least one group of design data is generated and the user selects one design data group through the operating section 106 on the basis of the displayed design data.

In this embodiment, management of route guidance is performed on the basis of selected design data, as described below.

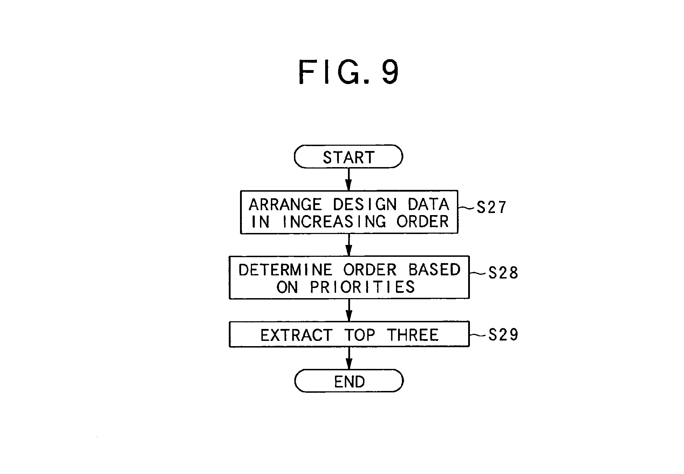

Description will now be made of operations in priority processing at the time of generation of design data (hereinafter referred to as "priority processing") in this embodiment with reference to FIG. 9.

FIG. 9 is a flowchart showing operations in priority processing in this embodiment.

In this embodiment, priority processing is performed on the basis of the degrees of priority computed in step S23 in the above-described generation processing.

If the route guidance process generation section 123 determines that all the design data groups have been generated by combining the routes between the two points in the departure point and the destinations and the corresponding required times (step S24), it arranges all the generated design data groups in increasing order of time required for the entire process (step S27).

At this time, the route guidance process generation section 123 deletes the design data having the tenth or lower priorities.

Subsequently, the route guidance process generation section 123 determines the order of the design data groups on the basis of the points added at step S24, i.e. , the degrees of priority (step S28).

For example, one design data group having the fifth priority in terms of the time required for the entire process has a degree of priority of two points if the expected arrival times and the expected departure times of two destination set in the design data are contained in the recommended visit time. The priority of the design data group is therefore increased by two. Consequently, the priority of this design data group is the third. Processing in step S27 is performed from the lower priority.

Subsequently, the route guidance process generation section 123 presents the three design data groups having the top three priorities to the user through the display section 109 and the speech processing circuit 112 (step S29), thereby completing this processing.

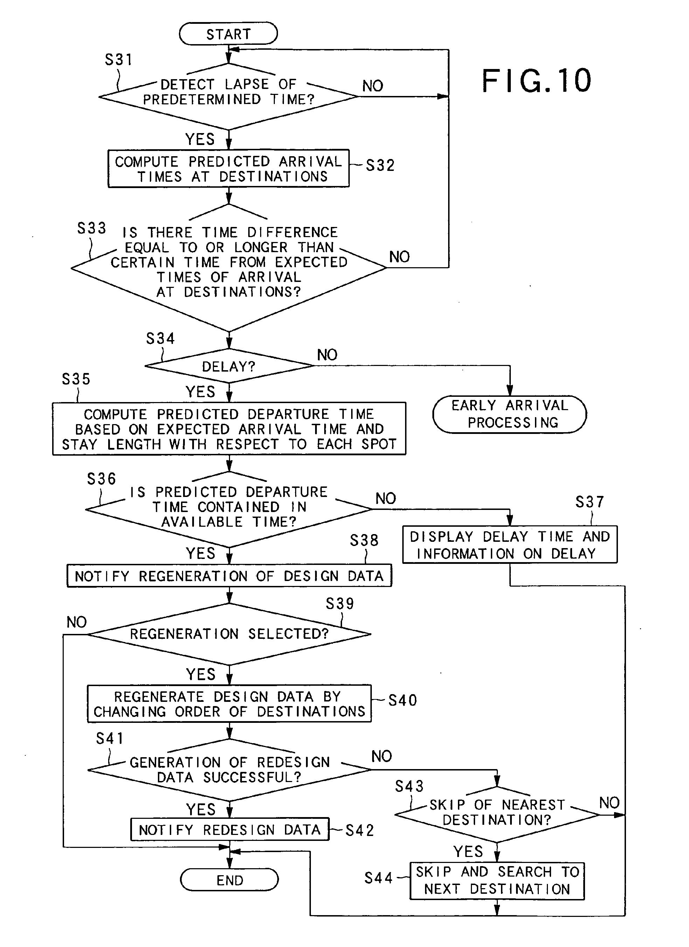

Description will now be made of process management processing based on design data in this embodiment with reference to FIG. 10.

FIG. 10 is a flowchart showing operations in process management processing in this embodiment.

This process management processing is executed when route guidance for the vehicle is performed on the basis of selected route data and the following processing is executed at a predetermined time interval during the route guidance.

When the route guidance process control section 125 detects a lapse of time set in advance during route guidance (step S31), it makes the route guidance process management section 124 compute predicted arrival times at unvisited ones of the destinations set in selected route data (unvisited destinations) (step S32).

Subsequently, the route guidance process control section 125makes the route guidance process management section 124 compare the predicted arrival times at the unvisited destinations and the expected arrival times at the unvisited destinations set in the selected route data to determine, with respect to each of the unvisited destinations, whether or not there is a time difference equal to or longer than a certain time period determined in advance for the destination between the predicted arrival time and the expected arrival time (step S33).

In this embodiment, if there is a time difference equal to or longer than the certain time period between the predicted arrival time and the expected arrival time with respect to at least one of the unvisited destinations, the route guidance process management section 124 determines that there is a time difference equal to or longer than the certain time period between the predicted arrival times and the expected arrival times, and determines, with respect to each destination, whether or not there is a time difference equal to or longer than 10 minutes between the expected arrival time and the predicted arrival time.

If the route guidance process management section 124 determines that there is no time difference equal to or longer than the certain time period between the predicted arrival time and the expected arrival time at any of the unvisited destinations, the route guidance process control section 125 makes a move to processing in step S31. If the route guidance process management section 124 determines that there is a time difference equal to or longer than the certain time period between the predicted arrival time and the expected arrival time, the route guidance process control section 125 makes the route guidance process management section 124 determine whether the time difference equal to or longer than the certain time period is due to a delay or earlier arrival (step S34).

If the route guidance process management section 124 determines that the time difference equal to or longer than the certain time period is due to earlier arrival, the route guidance process control section 125 makes a move to earlier processing described below. If the route guidance process management section 124 determines that the time difference equal to or longer than the certain time period is due to a delay, the route guidance process control section 125 makes the route guidance process management section 124 perform process management processing in the case of delay (hereinafter referred to as "delay processing") described below.

The route guidance process control section 125 first makes the route guidanceprocessmanagement section 124 compute predicted departure times from the unvisited destinations on the basis of the predicted arrival times at the unvisited destinations and stay length information on the destinations (step S35).

Subsequently, the route guidance process control section 125 makes the route guidance process management section 124 determine whether or not the computed predicted departure time from one of the unvisited destinations is contained in the available time in the spot data on the destination (step S36).

If the expected departure time is contained in the available time of the destination, the route guidance process control section 125 makes the route guidance process management section 124 notify the delay time and the occurrence of the delay through the system control section 115 by the display section 109 or the speaker 113 (step S37). This process management processing is then terminated.

If the expected departure time at the destination is not contained in the available time of the destination, the route guidance process control section 125 makes the route guidance process management section 124 inquire of the user whether or not regeneration of the route guidance process should be performed (step S38) and make a determination according to an instruction from the user (step S39).

If regeneration of the route guidance process is not selected by the user, and if the route guidance process management section determines that regeneration of the route guidance process will not be performed (step S39), this processing is terminated.

When this process management processing is terminated by this processing, the route guidance process control section 125 determines that the user does not wish to perform regeneration of the route guidance process, and decides not to perform this process management processing before departure from the next destination.

In a case where the route guidance process management section 124 inquires of the user whether or not regeneration of the route guidance process should be performed (step S38) and the user selects regeneration of the route guidance process (step S39), the route guidance process control section 125 makes the route guidance process management section 124 change the positions of unvisited destinations in visit order, generate design data for the route guidance process by using at least one combination of the positions in visit order (step S40), and determine whether or not design data for the route guidance process can be generated (step S41).

More specifically, in this processing, the route guidance process management section changes the positions in visit order in all route patterns of the unvisited destinations, performs the above-described design data generation processing on the basis of the positions of the destinations changed in visit order, and determines whether or not the above-described design data generation processing using the unvisited destinations can be performed.

If the route guidance process management section 124 can generate design data for the route guidance process by at least one combination of the positions in visit order, the route guidance process control section 125 makes the route guidance process management section 124 generate redesign data by removing the nearest unvisited destination and notify redesign data newly generated by replacement with the redesign data generated by removing the destination to the user through the system control section 115 by the display section 109 or the speaker 113 (step S42).

In this processing, a destination to be removed other than the nearest unvisited destination may be selected by the user through the operating section.

In this processing, if a plurality of redesign data groups are generated, one of them formed by a smaller number of changes of the destinations and having the highest priority is set as a new redesign data generated by this change processing.

If the route guidance process management section 124 cannot generate design data for the route guidance process by any combination of the positions in visit order, the route guidance process control section 125 makes the route guidance process management section 124 inquires of the user whether or not the nearest unvisited destination should be removed through the route guidance process control section 125 by the display section 109 or the speaker 113 (step S43).

If removal of the nearest unvisited destination in the selected route data is selected by the user, the route guidance process control section 125 makes the route guidance process management section 124 perform deletion processing for removing the selected unvisited destination (step S44) and controls the sections to perform route guidance on the basis of the selected route data. This management processing is then terminated.

More specifically, in this deletion processing, the destination to be next visited in the unvisited destinations is removed from the selected route data and route guidance process management is continued on the basis of the selected route data from which the destination has been removed.

In this processing, a destination to be removed other than the nearest destination may be selected by the user through the operating section.

If removal of the nearest unvisited destination in the selected route data is not selected by the user, the route guidance process control section 125 immediately terminates this processing.

When this process management processing is terminated by this processing, the route guidance process control section 125 determines that the user does not wish to perform regeneration of the route guidance process, and decides not to perform this process management processing before departure from the next destination.

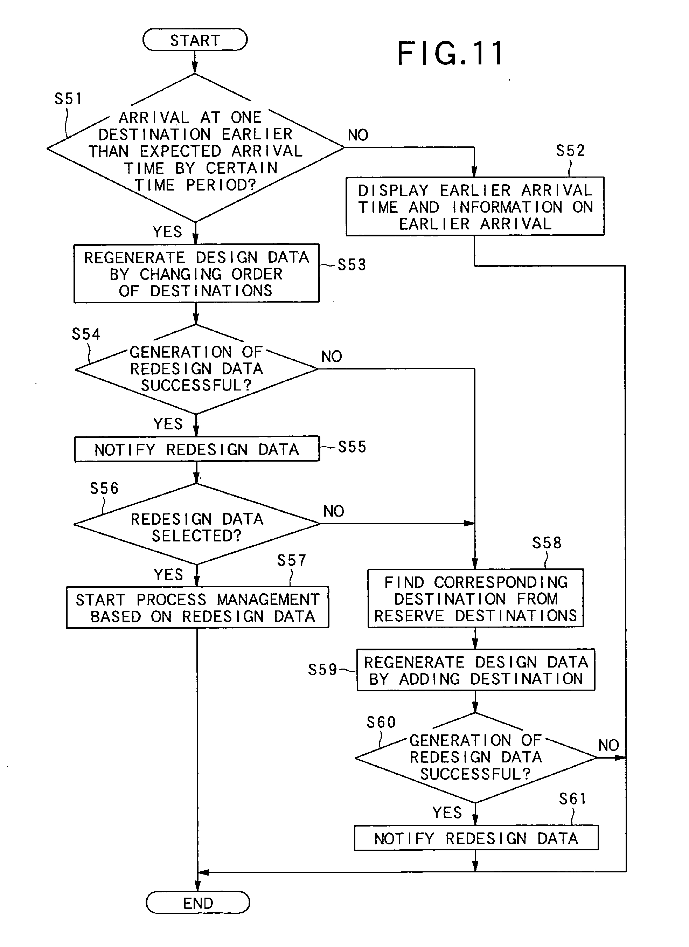

Description will now be made of operations in early arrival processing in process management processing in this embodiment with reference to FIG. 11.

FIG. 11 is a flowchart showing early arrival processing in process management processing in this embodiment.

In this embodiment, as mentioned above, when design data for a route guidance process is generated, a predetermined number of destinations not registered as destinations are stored in advance in the RAM/ROM 116.

In a case where the route guidance process management section 124 determines in step S34 that the time difference equal to or longer than the certain time period is due earlier arrival as described above, the route guidance process control section 125 makes the route guidance process management section 124 compare the predicted arrival times at the destinations not yet visited (unvisited destinations) and the expected arrival times at the unvisited destinations set in the selected route data to determine, with respect to each of the destinations, whether or not there is a time difference equal to or longer than a certain time period determined in advance for the destination (step S51).

In this embodiment, if there is a time difference equal to or longer than the certain time period between the predicted arrival time and the expected arrival time with respect to at least one of the unvisited destinations, the route guidance process management section determines that there is a time difference equal to or longer than the certain time period between the predicted arrival times and the expected arrival times, and determines, with respect to each destination, whether or not there is a time difference equal to or longer than 20 minutes between the expected arrival time and the predicted arrival time, as it does in the above-described step S33.

If the route guidance process management section 124 determines that there is no time difference equal to or longer than the certain time period between the predicted arrival time and the expected arrival time at any of the unvisited destinations, the route guidance process control section 125 makes the route guidance process management section 124 indicate the arrival time and the occurrence of earlier arrival through the display 109 or the speaker 113 (step S52). This process management processing is then terminated.

If the route guidance process management section 124 determines that there is a time difference equal to or longer than the certain time period between the predicted arrival times and the expected arrival times at the unvisited destinations, the route guidance process control section 125 makes the route guidanceprocessmanagement section 124 perform change processing for changing the positions of the unvisited destinations in visit order (step S53).

More specifically, in this processing, the positions in visit order in all route patterns of the unvisited destinations are changed and the above-described design data generation processing is performed on the basis of the positions of the destinations changed in visit order.

Subsequently, the route guidance process control section 125 makes the route guidance process management section 124 determine whether or not redesign data can be newly generated by change processing (step S54).

More specifically, the route guidance process management section 124 determines whether or not the time required for the entire process of redesign data having a smaller number of changes of the destinations is shorter than the time required for the entire process in the selected route data.

If the route guidance process management section 124 achieves success in generating new design data for the route guidance process by change processing, that is, if the time required for the entire process according to the redesign data having a smaller number of changes of the destinations is shorter than the time required for the entire process in the selected route data, the route guidance process control section 125 makes the route guidance process management section 124 notify the user of the newly generated redesign data through the display section 109 or the speaker 113 (step S55), when the newly generated redesign data is selected by the user (step S56), and continues route guidance process management by using the newly generated redesign data as selected route data (step S57).

If the route guidance process management section 124 determines that no new design data for the route guidance process can be generated by change processing, that is, if the time required for the entire process according to the redesign data having a smaller number of changes of the destinations is longer than the time required for the entire process in the selected route data, or if the destinations are changed by the user in step S56 and the newly generated redesign date is not selected, the route guidance process control section 125 makes the route guidance process management section 124 generate a route guidance process in the above-described manner and search the reserve destinations stored in the ROM/RAM 116 for one existing on the selected route or in a certain distance range from the route (step S58) .

If no destination is found, the route guidance process management section 124 sets one destination closest to the route as a new destination. If a plurality of destinations are found, one of them existing on the route indicated by the selected route data or one of them closest to the route is set as a new destination.

If the route guidance process management section 124 finds one destination existing on the selected route or in the certain distance range from the route from those stored in the ROM/RAM 116, the route guidance process control section 125 adds this destination to the unvisited destinations and controls the route guidance process generation section 123 to generate design data as described above (step S59).

In this processing, if a plurality of redesign data groups are generated, one of them formed by a smaller number of changes of the destinations and having the shortest time required for the entire process according to the redesign data is set as a new redesign data.

Subsequently, the route guidance process control section 125 makes the route guidance process management section 124 determine whether or not redesign data in the new route guidance process has been generated (step S60).

More specifically, the route guidance process management section 124 determines whether or not the sum of the time differences between the expected arrival times in the redesign and the expected arrival times in the selected route data is shorter than a predetermined time set in advance.

If the route guidance process management section 124 determines that the sum of the time differences between the expected arrival times in the redesign and the expected arrival times in the selected route data is shorter than a predetermined time set in advance, the route guidance process control section 125 determines that redesign data in the new route guidance process has been generated, notifies the user of the new redesign data, sets the new redesign data as selected route data (step S61) and controls the sections to perform route guidance based on the set selected route data, thereby completing this process.

If the route guidance process management section 124 determines that the sum of the time differences between the expected arrival times in the redesign and the expected arrival times in the selected route data is longer than a predetermined time set in advance, the route guidance process control section 125 determines that redesign data in the new route guidance process cannot be generated, and terminates this process management processing.

Thus, the arrangement in this embodiment is provided with the route guidance process generation section 123 that obtains departure point data including at least data on the position of a vehicle at a departure point, the operating section 106 through which destinations to which the vehicle should travel are registered, the spot data extraction section 121 that obtains spot data on a destination including at least location data indicating the location of the destination, stay length information representing information on an expected length of stay at the destination and available time information indicating available dates/times of the destination, the map data storage device 105 in which map data is stored, and the route guidance process generation section 123 that generates data on a route from the departure point to one destination including at least an expected arrival time at the destination on the basis of the departure point location data obtained, the spot data on the registered destinations and the map data. In this arrangement, the system control section 115 performs route guidance from a departure point to a destination on the basis of generated design data.

In this arrangement, according to this embodiment, spot data on a destination including at least location data indicating the location of the destination, information on a length of stay at the destination and information on the available time of the destination is obtained, design data for a route guidance process from a departure point to the destination including an expected arrival time is generated on the basis of departure point location data obtained, spot data on registered destinations and map data, and route guidance from the departure point to the destination is performed on the basis of the generated design data.

Thus, route guidance from a departure point to a destination can be performed on the basis of stay lengths at registered destinations and available times of the destinations. Therefore, if a date/time at which route guidance is performed is set, efficient route guidance can be achieved such that the route guidance date/time coincides with an available date/time and stay lengths are considered.

In a case where a plurality of destinations are registered by the operating section 105, the arrangement in this embodiment is also provided, so that the route guidance process generation section 123 generates route data on a route extending from a departure point to one destination to another.

In this arrangement, according to this embodiment, the route guidance process generation section 123 generates route data on a route extending from a departure point to one destination to another in a case where a plurality of destinations are registered by the operating section 106. Therefore, if a date/time at which route guidance is performed is set, efficient route guidance can be achieved such that the route guidance date/time coincides with an available date/time; stay lengths at the plurality of destinations can be taken into consideration; and the route extends via the plurality of destinations.

The arrangement in this embodiment is also provided with the display section 109 and the speech processing circuit 112 through which at least one of design data generated by the route guidance process generation section 123 and destination information representing information on destinations including at least expected arrival times at the destinations in the design data is notified.

This arrangement in this embodiment enables notification of destination information or design data and enables information on destinations which will be visited to be provided to a user.

In a case where destination information includes at least one of information on names of registered destinations, expected departure time information indicating expected departure times from the destinations in route data, and expected stay length information indicating expected stay lengths at the destinations in the route data, the arrangement in this embodiment is also provided, so that the display section 109 and the speech processing circuit 112 notify at least one of information on the destination names, information on the expected arrival times, information on the expected departure times, and information on the stay lengths.

In this arrangement, according to this embodiment, the display section 109 and the speech processing circuit 112 notify at least one of information on the destination name information, the expected arrival time information and the stay length information, thereby enabling destination information from these sorts information to be provided to the user.

The arrangement in this embodiment is also provided with the operating section 106 in a case where a plurality of route data groups are generated by the route guidance process generation section 123 and where the display section 109 and the speech processing circuit 112 notify the plurality of route data groups generated, the operating section 106 selecting one of the plurality of route data groups notified. In this arrangement, the system control section 115 performs route guidance from a departure point to a destination on the basis of the selected design data.

In a case where a plurality of generated design data groups exist, this arrangement in this embodiment enables selection from one of a plurality of presented design data groups. Therefore, if a date/time at which route guidance is performed is set, efficient route guidance can be achieved such that the route guidance date/time coincides with an available date/time coincide with and stay lengths are considered. Also, a route according to user's demand can be selected.

The arrangement in this embodiment is also provided, so that the route guidance process generation section 123 computes the time required for the entire process according to design data and generates route data on the basis of the computed design data required time.

In this arrangement, according to this embodiment, design data can be generated by computing the time required for the entire process according to design data. Therefore, if a date/time at which route guidance is performed is set, efficient route guidance can be achieved such that the time required for the entire process on the route are taken into consideration; the route guidance date/time coincides with an available date/time; and stay lengths are also considered.

In a case where the route guidance process generation section 123 obtains as departure point data a departure date/departure time from a departure point as well as the location of the departure point, the arrangement in this embodiment is also provided, so that the route guidance process generation section 123 searches routes to a destination on the basis of map data and data on the locations of destinations, outputs at least one route as a search result, determines whether or not a visit can be made within the period of the available dates/times of the registered destination on the basis of the obtained departure point data, the output search result, information on the stay lengths at the destinations and information on the available dates/times of the destinations, and generates route data on a route extending from the departure point to one destination to another on the basis of the result of the determination.

This arrangement in this embodiment makes it possible to generate design data on a route extending from a departure point to one destination to another on the basis of the result of a determination based on obtained departure point data, an output route result, information on stay lengths at destinations and information on available dates/times of the destinations, thereby achieving efficient route guidance according to user's demand such that a destination to which the user wishes to visit can be reliably included in the design data; the date/time at which the route guidance is performed coincides with an available date/time; and the stay lengths are considered.

In a case where the route guidance process generation section 123 determines that a visit to at least one destination cannot be made on the basis of information on the stay lengths at the destinations and information on available dates/times of the destinations, the arrangement in this embodiment is also provided, so that the display section 109 and the speech processing circuit 112 notify that a visit to at least one destination cannot be made.

In this arrangement, according to this embodiment, if it is determined on the basis of information on the stay lengths at the destinations and information on available dates/times of the destinations that a visit to one of the destinations cannot be made, the display section 109 and the speech processing circuit 112 notify that a visit to at least one of the destinations cannot be made, and can inform the user that the visit to the destination cannot be made before arrival at the destination, thereby enabling the user to change the schedule in advance.

The arrangement in this embodiment is also provided, so that the route guidance process generation section 123 computes an expected arrival time at a destination and an expected departure time from the destination on the basis of obtained departure point data, search results output from search device and information on stay lengths at destinations obtained by the spot data extraction section 121, and determines whether or not the computed expected arrival time and expected departure time are contained in the available time indicated by the available time of the destination.

This arrangement in this embodiment enables the user to be notified, before departure, of a destination to which a visit cannot be made, and enables a destination to which the user wishes to visit to be reliably included in design data, thereby achieving efficient route guidance according to user's demand such that the date/time at which the route guidance is performed coincides with an available date/time, and the stay lengths are considered.

In a case where the route guidance process generation section 123 determines that a visit to at least one destination cannot be made on the basis of information on the stay lengths at the destinations and information on available dates/times of the destinations, the arrangement in this embodiment is also provided, so that the route guidance process generation section 123 determines whether or not the destination to which a visit cannot be made can be made visitable by changing the stay length indicated by information on the length of stay at the destination, and computes a change in stay length if it determines that the non-visitable destination can be visited if the stay length is changed, and the display section 109 and the speech 112 notify the computed change in stay length to be made.

This arrangement in this embodiment enables the user to be notified of the length of stay at a destination which the user may visit even by shortening the stay length, and to determine whether or not all the registered destinations can be visited if the stay length is shortened.

The arrangement in this embodiment is also provided, so that the spot data extraction section 121 obtains genre information on a registered destination and obtains information on the length of stay at the registered destination on the basis of the obtained genre information.

This arrangement in this embodiment ensures that stay length information can be obtained even if the stay length information is not contained in spot data, thereby achieving efficient route guidance considering stay lengths even in a case where destinations having no stay length information contained in spot data are registered or destinations are registered without entering stay length information in advance for ease of user's input operation.

The arrangement in this embodiment is also provided with the operating section 106 through which predicted stay length information is set in advance in a state of being associated with spot data. In this arrangement, the spot data extraction section 121 obtains the set predicted stay length information at the time of obtaining spot data.

This arrangement in this embodiment makes it possible to set in advance stay lengths to be contained in spot data, and to set a route on the basis of the set stay lengths, thereby achieving efficient route guidance considering the stay length at a destination according to user's demand.

In this embodiment, the route guidance process generation section 123 computes a priority for each of route data groups in relation to the others on the basis of spot data on registered destinations, and the display section 109 and the speech processing circuit 112 notify one of each route data group or destination information in the route data on the basis of the computed required times of the route data groups and the computed priorities.

This arrangement in this embodiment enables the user to be notified of design data groups in descending order of priority, that is, in order from one of the design data groups matching the available time of a destination, prepared by considering a meal time and a recommended visit time and having a higher degree of priority. Since the design data first presented represents a route most strongly recommended from the viewpoint of the time to visit the destination for example, the user can easily select the recommended design data.

In a case where map data includes at least one of genre information indicating the genres of destinations and weather information indicating whether or not a visit can be made according to the weather, the arrangement in this embodiment is also provided, so that the route guidance process generation section 123 computes a priority for each of route data groups in relation to the others on the basis of spot data on registered destinations.

This arrangement in this embodiment makes it possible to compute a priority for each design group by considering weather information or genre information on the registered destinations, thereby enabling the user to set a route in which the date/time of the route guidance coincides with an available date/time, and which is most strongly recommended from the viewpoint of the time to visit the destination for example.

The arrangement in this embodiment is also provided, so that map data may include at least one of genre information indicating the genres of destinations and weather information indicating whether or not a visit can be made according to the weather and the display section 109 and the speech processing circuit 112 may be provided. In this arrangement, when route data is generated by the route guidance process generation section 123, the display section 109 and the speech processing circuit 112 notify one of the genre information or the weather information on one destination registered through the operating section 105.

This arrangement in this embodiment makes it possible to notify the weather or the genre of each destination when design data is notified to the user. Thus, the weather and the genre of a set destination can be easily notified.

The arrangement in this embodiment is also provided with the GPS reception section 101 and the sensor section 102 that obtain present position data indicating the present position of the vehicle when route guidance is performed and the route guidance process management section 124 that computes, during route guidance, on the basis of the obtained vehicle present position data, a predicted arrival time at which arrival at one of registered destinations will occur, and regenerates data on a route from the obtained present vehicle position to an unvisited destination set in route data but not yet visited, on the basis of the expected arrival time and the computed predicted arrival time. In this arrangement, the system control section 115 performs route guidance on the basis of the regenerated selected route data.

In this arrangement, according to this embodiment, a predicted arrival time at which arrival at one of registered destinations will occur is computed on the basis of the obtained present position of the mobile unit during route guidance; design data on a route from the obtained present mobile unit position to an unvisited destination set in the route data but not yet visited is regenerated on the basis of the expected arrival time and the computed predicted arrival time; and route guidance is performed on the basis of the regenerated redesign data.

In this embodiment, if earlier arrival or a delay in arrival at a destination occurs, it is determined on the basis of a predicted arrival time at the destination and an expected arrival time at the destination set in the selected route data that the process does not progress in accordance with the selected route data. In this way, route resetting is enabled in a case where the process does not progress in accordance with the selected route data during route guidance. Therefore, efficient route guidance can be achieved such that the actual guidance route is considered while checking available times and stay lengths.

The arrangement in this embodiment is also provided, so that the generated route guidance process management section 124 computes the time difference between expected arrival times and computed predicted arrival times, determines on the basis of the computed time difference whether or not a route to an unvisited destination set in selected route data should be regenerated, and performs regeneration of route data when it determines that the route to the unvisited destination should be regenerated.

In this arrangement, according to this embodiment, if earlier arrival or a delay in arrival at a destination occurs, it is determined on the basis of a predicted arrival time at the destination and an expected arrival time at the destination set in the selected route data that the process does not progress in accordance with the selected route data. In this way, route resetting is enabled in a case where the process does not progress in accordance with the selected route data during route guidance. Therefore, efficient route guidance can be achieved such that the actual guidance route is considered while checking available times and stay lengths.

The arrangement in this embodiment is also provided, so that the regenerated route guidance process management section 124 determines on the basis of a computed time difference at least one of addition of a destination to be newly set as an intermediate destination and removal of a destination set in route data, and determines on the basis of the result of this determination whether or not a route to an unvisited destination set in the selected route data should be regenerated.

In this arrangement, according to this embodiment, if arrival before or after an available time of any destination, e.g., earlier arrival or delay in arrival relative to an expected time set in the selected route data occurs, a destination without allowance for variation in arrival time with respect to available time or open hours can be removed or added. Therefore, even in a case where the actual route guidance process allows delay or earlier arrival with respect to the selected route data, a visit to a destination according to user's demand can be ensured without changing the entire schedule based on the selected route data.

In a case where a plurality of unvisited destinations exist when the system control circuit 115 performs route guidance based on route data, the arrangement in this embodiment is also provided, so that the route guidance process management section 124 regenerates data on a route from the present vehicle position to an unvisited destination obtained by changing the unvisited destination visit order set in the selected route data.

In this arrangement, according to this embodiment, if arrival before or after an available time of any destination, e.g., earlier arrival or delay in arrival relative to an expected time set in the selected route data occurs, a destination with allowance for variation in arrival time with respect to available time or open hours and a destination without allowance for variation in arrival time with respect to available time can be changed with each other. Therefore, even in a case where the actual route guidance process allows earlier arrival or delay with respect to the selected route data, a visit to a destination according to user's demand can be ensured without changing the entire schedule based on the selected route data.

The arrangement in this embodiment is also provided, so that the display section 109 and the speech processing circuit 112 notify that the route guidance process management section 124 regenerates selected route data.

This arrangement in this embodiment enables the user to be notified of regeneration of selected route data.

The arrangement in this embodiment is also provided with the operating section 106 through which selection is made as to whether or not route guidance should be performed on the basis of route data regenerated by the route guidance process generation section 123 in a case where the display section 109 and the speech processing circuit 112 notify regeneration of route data. In this arrangement, the route guidance process management section 124 regenerates the route when regeneration of the route is selected through the operating section 106.

This arrangement in this embodiment enables the user to confirm regeneration of selected route data, thus realizing route guidance according to user's demand.

In this embodiment, each setting is made through the operating section 106 in generation processing and process management processing. The arrangement may alternatively be such that the speech recognition circuit 108 is used instead of the operating section 106 to make settings and selections by device of speeches uttered by the user.

In this embodiment, in a case where destinations are registered as a final destination and intermediate points when the route guidance process generation section 123 generates design data for a route guidance process, the route guidance process generation section 123 may generate design data by fixing only the final destination, or may generate design data on the basis of the above-described available time and so on with respect to all destinations in a case where the destinations are registered without fixing the final destination.

In the description of this embodiment, description has been made of route guidance process generation processing by assuming that a destination corresponding to the genre "place to have meal" is necessarily included in registered destinations. In a case where no genre information "place to have meal" is provided for registered destinations at the time of generation of design data, a display for setting a place to have a meal is produced on condition that a setting for this display is made in advance by the user; the regeneration processing is interrupted; a setting of a destination as a place to have a meal is made; and the processing is resumed from a starting operation. Further, not only in this case but also in a case where a setting is made not to interrupt the generation processing even when the user registers no place to have a meal, the determination step (step S20) with respect to a place to have a meal in the generation processing is not performed.

In this embodiment, registration of destinations is performed by the operating section 106 and the route guidance process control section 125. However, the route guidance process control section 125 performs, instead of the operation using the operating section 106, an operation to obtain destinations by obtaining drive information stored on the Internet via the communication section 114.

In such a case, the drive information is constituted by a plurality of destinations, spot data on the destinations and route data, and the route guidance process control section 125 sets this route data as selected route data and uses the spot data on the destinations obtained as spot data groups. However, for points without spot data, values set in correspondence with genres in advance are used.

In this embodiment, spot data may include sightseeing guide information for guidance about points worthy of notes or the like in destinations or destination areas, and this guide information may be presented by the display section 109 and the speech processing circuit 112 when the vehicle comes close to a distance range from the destination having this guide information.

In this embodiment, generation of design data and redesign data and guidance control using the design data are performed by the above-described navigation apparatus 100, i.e., the route guidance process generation section 123 and the route guidance process management section 124. However, the arrangement may be such that the navigation apparatus 100 having map data and an information recording medium on which the map data is stored is provided with a computer and a recording medium, the above-mentioned route data generation program and management program are stored on this recording medium, and the computer reads these control programs to perform the same generation processing and management processing as those described above.

In this embodiment, the navigation apparatus of the present invention is applied to a navigation apparatus mounted on a vehicle. Needless to say, the functions in the system control sections 115, i . e . , those of the map data extraction section 121, the route search section 122, the route guidance process generation section 123, the route guidance process management section 124, the route guidance process control section 125, may be provided in a server apparatus installed in any place, communication between the server apparatus and a terminal apparatus mounted on a vehicle may be performed via a communication circuit such as an Internet circuit, and the server apparatus may perform generation processing and management processing.

In such a case, the server apparatus stores various sorts of data including design data necessary for generation processing and management processing for each of vehicles, and the terminal apparatus has a communication section for communication with the server apparatus. The terminal apparatus transmits various sorts of data registered through an operating section, and also transmits and receives design data and control data for control of route guidance to perform generation processing and management processing.

While in this embodiment the navigation apparatus of the present invention is applied to a navigation apparatus mounted on a vehicle, it may be applied to a portable terminal device for pedestrians.

In such a case, information on the present position of the portable terminal device may be obtained not by the GPS reception sensor 101 and the sensor section 102 but by a present position acquisition section in the portable terminal device, which obtains the information by use of radio waves for communication.

In this embodiment, when design data is generated in the route guidance process generation section 123, priorities for design data groups are computed. However, priorities for design data groups may be computed in such a manner that information on an estimated cost necessary at each destination (hereinafter referred to as "estimated cost information") is stored together with spot data in the map data storage section 105, and priorities for design data groups are computed on the basis of an estimated cost required for the entire process (hereinafter referred to as "total estimated cost") at the time of generation of a route guidance process.

For example, when an instruction to generate a route guidance process is registered and when the system control section 115 demands registration of information necessary for generation of the route guidance process, the system control section 115 calls on the user to register information on the total estimated cost. When the system control section 115 generates design data on the basis of registered destinations, and the system control section 115 makes the route guidance process generation section 123 compute the total estimated cost on the basis of estimated cost information on the destinations. When priority processing is performed, the system control section 115 makes the route guidance process generation section 123 set the priority of design data groups having total estimated costs not exceeding a registered total cost higher than the priority of design data groups having estimated costs exceeding the registered total cost.

Thus, in this case, design data can be generated by considering the total estimated cost expected by the user.

### [SECOND EMBODIMENT]

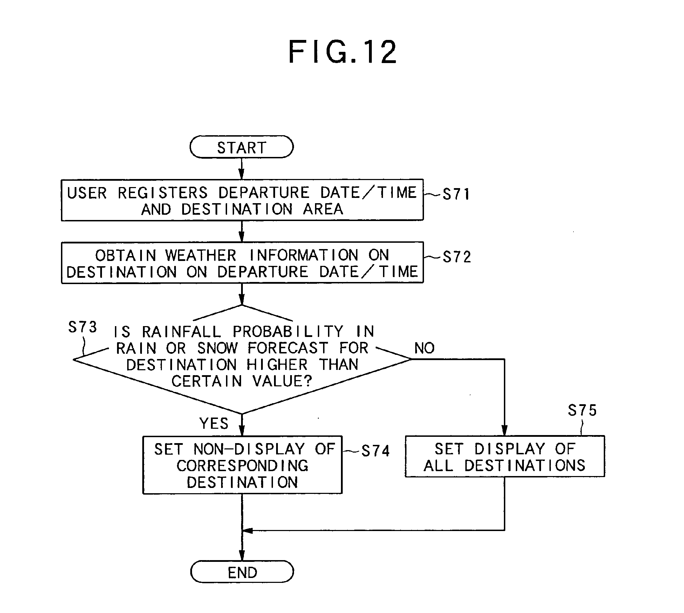

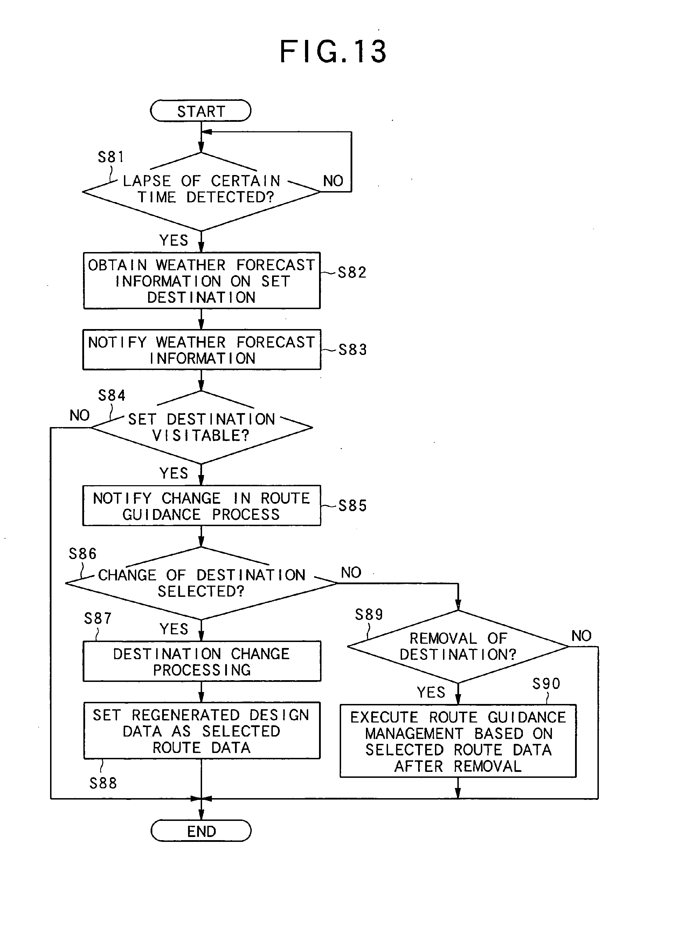

A second embodiment of the navigation apparatus according to the present invention will be described with reference to FIGs. 12 and 13.

A feature of this embodiment resides in that, in addition to generation of design data based on spot data on registered destinations and route guidance management in the first embodiment, route guidance process processing is performed by generating design data on the basis of weather information on destinations on a departure date/time or at the time of route guidance. In other respects, the arrangement is the same as that of the first embodiment. The same components are indicated by the same reference numerals and description for the same components will not be repeated.

Description will first be made of the route guidance process control section 125 and the route guidance process management section 124 of this embodiment.

The route guidance process control section 125 performs the same operations as those in the first embodiment and, in setting start processing in the first embodiment, allows the user to register a destination area to visit when the user sets a departure date/time, fellow passengers and rest places on the basis of a menu frame display, and obtains weather forecast information on the destination area on the departure date/time on the basis of information about the destination area. If a destination determined as non-visitable according to this weather information exists in the destination area, the route guidance process control section 125 does not permit display of the destination on the display section 109.

More specifically, the route guidance process control section 125 determines whether or not one of destinations existing in the set destination area can be visited on the basis of the weather information stored in spot data with respect to the destination area and the weather forecast information on the destination obtained through the communication section 114. If one of the destinations in the destination area is determined as non-visitable on the basis of the weather information, the route guidance process control section 125 does not permit display of the destination determined as non-visitable when the destination setting frame described in the description of the first embodiment is displayed.

For example, if a destination having such weather information stored in spot data that the destination cannot be visited under the condition that rainy weather or snowy weather exists in the destination area, and if weather information indicating that the weather at the destination will be rainfall or snowfall and including a rainfall probability higher than a certain value with respect to the destination is obtained, the route guidance process control section 125 determines that the destination cannot be visited and does not permit display of the destination at the time of display of the destination setting frame.

In this embodiment, the spot data includes weather information indicating states sensitive/insensitive to weather as in indoor facilities and outdoor facilities, as well as position information, genre information, available time information, recommended visit time information and stay length information. The spot data is stored by being associated with position information on a map and names of destinations, as is that in the first embodiment.

This weather information indicates, for example, a condition in which study and observation or an activity at a destination cannot be performed, as in the case of suspension of an activity due to rainy weather, and a condition in which an activity cannot be performed at a destination if the temperature is high or low.

Operations in weather acquisition processing in the route guidance process control section 125 in this embodiment will be described below in detail.

The route guidance process management section 124 obtains weather forecast information on destinations set in selected route data at predetermined time intervals from a server apparatus selected as desired through the communication section 114, when route guidance is performed on the basis of the selected route data. The route guidance process management section 124 determines whether or not the destinations can be visited on the basis of the obtained weather information or generates redesign data by rearranging the destinations at such points in time that the destinations can be visited. The route guidance process management section 124 performs processing for generation of the redesign data as operating processing other than route guidance process management processing in the first embodiment.

For example, in a case where a destination having weather information indicating impossibility of visit under the condition that rainy weather is registered in selected route data, the route guidance process management section 124 obtains whether forecast information through the communication section 114 and determines the weather and the duration of the weather on the basis of the weather forecast information. If the expected arrival time at the destination included in the selected route data coincides with the duration of rainy weather or snowy weather, it notifies the user of this condition and calls on the user to remove the destination or change the destination with a different one. If a corresponding instruction is provided from the user, the route guidance process management section 124 removes the destination or changes the destination with a different one.

For example, in this embodiment, if the route guidance process management section obtains weather forecast information including a rainfall probability of 80% or higher, it determines that the weather at the destination is rainy.

Operations in processing for weather management in the route guidance process management section 124 of this embodiment will be described below.

Description will now be made of operations in processing of weather forecast information (hereinafter referred to as "weather acquisition processing") in the route guidance process control section 125 of this embodiment with reference to FIG. 12.

FIG. 12 is a flowchart showing operations in weather acquisition processing in this embodiment.

In this embodiment, operations described below are performed in a case where when the user sets a departure date/time, fellow passengers and rest places on the basis of display of the menu frame in setting start processing in the first embodiment, the user registers a destination area and the route guidance process control section 125 controls the display control section 111 to display the selection frame for selection of a destination.

When a departure date/time and a destination area is registered on the basis of the main menu frame by the user (step S71), the route guidance process control section 125 obtains weather forecast information on the destination area on the departure date/time from a desired server apparatus through the communication section 114 via a public telephone network circuit or an Internet circuit (step S72).

Subsequently, the route guidance process control section 125 determines whether or not the weather information is information on rainy weather or snowy weather including rainfall probability of 80% or higher (step S73). If the weather is rainy or snowy weather and if the rainfall probability is 80% or higher, the route guidance process control section 125 makes the display section 109 display the destination setting frame without permitting display of the destination (step S74). If the weather is rainy or snowy weather and if the rainfall probability is lower than 80%, the route guidance process control section 125 makes the display section 109 display the destination setting frame with the ordinary list contents (step S75).

Thus, in this embodiment, the display at the time of registration of destination is controlled on the basis of weather information. Operations after control of display of the destination setting frame are the same as those in the first embodiment.

Description will now be made of operations inprocessing for weather management (hereinafter referred to as "weather management processing") with reference to FIG. 13.

FIG. 13 is a flowchart showing operations in weather management processing in this embodiment.

This processing is performed as operating processing different from route guidance process management processing in the first embodiment to generate redesign data when route guidance process management processing is not performed.

If during route guidance the route guidance process control section 125 detects a lapse of time set in advance (step S81), it obtains weather forecast information on destinations set in selected route data from a desired server apparatus through the communication section 114 (step S82).

Subsequently, the route guidance process control section 125 notifies the user of the weather forecast information on the destinations through the display section 109 or the speaker 113 (step S83).

The operation in step S72 may alternatively be such that a setting made in advance is used instead of notification.

Subsequently, the route guidance process control section 125 makes the route guidance process management section 124 determine, with respect to each of the destinations in the selected route data, whether or not the destination is non-visitable under the weather indicated by the obtained weather forecast information in the spot data on the destination (step S84).

More specifically, if a destination having such weather information that the destination cannot be visited under the condition that rainy weather is registered in the selected data, the route guidance process management section 124 obtains whether forecast information through the communication section 114, determines the weather and the duration of the weather on the basis of the weather forecast information, and determines whether or not the expected arrival time at the destination included in the selected route data coincides with the duration of rainy weather or snowy weather (rainfall probability 80% or higher), as described above.

If the route guidance process management section 124 determines that any destination having such weather information that the destination cannot be visited under the condition that rainy weather is not registered in the selected data, the route guidance process control section 125 terminates this processing.

If the route guidance process management section 124 determines that a destination having such weather information that the destination cannot be visited under the condition that rainy weather is registered in the selected data, the route guidance process control section 125 notifies the user that the route guidance process will be changed through the display section 109 or the speaker 113 (step S85).

More specifically, the route guidance process management section 124 notifies selection as to whether the destination that cannot be visited should be removed or a new destination should be added in place of the destination that cannot be visited.

Subsequently, the route guidance process control section 125 determines whether or not the user has selected change of the destination (step S86). If the route guidance process control section 125 determines that the user has selected change of the destination, processing for change to a new destination is performed (step S87).

More specifically, in this processing, one of the destinations stored in advance as reserve destinations in the ROM/RAM 116 is selected and added to the unvisited destinations, and the route guidance process generation section 123 is controlled to generate design data, as in step S58 in the first embodiment.

Subsequently, the route guidance process control section 125 notifies the user of the new redesign data and sets the new redesign data as selected route data (step S88), and controls the sections to perform route guidance on the basis of the selected route data, thereby competing this process management processing.

If the route guidance process control section 125 determines that the user has not selected change of the destination, it determines whether or not the user has selected removal of the destination that cannot be visited (step S89).

If the route guidance process control section 125 determines that the user does no select removal of the destination, it terminates this processing. If the route guidance process control section 125 determines that the user does no select removal of the destination, it performs processing for removing the destination, as in the case of the delay processing in the first embodiment, and continues route guidance process management on the basis of the selected route from which the destination has been removed (step S90) .

Thus, in this embodiment, the arrangement in which the display section 109 and the speech processing circuit 112 notify weather forecast information, as in the case of the first embodiment, is provided.

In this arrangement, according to this embodiment, the display section 109 and the speech processing circuit 112 can notify weather forecast information to provide the user with information on destinations which will be visited.

In this arrangement is also provided the arrangement that has the GPS reception section 101 and the sensor section 102 that obtain present position data indicating the present position of the vehicle during route guidance, the route guidance process control section 125 that obtains, during route guidance, weather information on a destination set in route data, and route guidance process management section 124 that regenerates data on a route from the obtained present position of the vehicle to an unvisited destination which is a destination set in the route data but not yet visited, on the basis of the obtained weather information on the destination and weather information obtained by the spot data extraction section 121. In this arrangement, the system control section 115 performs route guidance on the basis of the generated route data.

In this arrangement, according to this embodiment, a route data from the present position of the vehicle to an unvisited destination which is a destination set in the selected route data but not yet visited is regenerated on the basis of weather information on the destination obtained by the route guidance process control section 125 and weather information obtained by the spot data acquisition device, and route guidance is performed on the basis of the regenerated selected route data.

Thus, in this embodiment, regeneration of the selected route data can be performed in a case where a destination registered in the selected route data cannot be visited due to rainy weather or the like during route guidance. Therefore, efficient route guidance can be achieved such that the actual weather route is considered while checking available times and stay lengths.

In this arrangement is also provided the arrangement in which the regenerated route guidance process management section 124 determines, on the basis of obtained weather forecast information on a destination and weather information on the destination obtained by the spot data extraction section 121, at least one of addition of a destination to be newly set as an intermediate destination and removal of a destination set in route data, and determines on the basis of the result of this determination whether or not a route to an unvisited destination set in the route data should be regenerated.

In this arrangement, according to this embodiment, removal of a destination where an activity cannot be performed when a visit to a destination is made and an activity cannot be performed in the destination, and addition of a different destination where the activity can be performed can be performed according to weather information on the destination. Therefore, a visit to a destination according to user's demand can be ensured without changing the entire schedule based on the selected route data.

In this embodiment, each setting is made through the operating section 106 in generation processing and process management processing. The arrangement may alternatively be such that the speech recognition circuit 108 is used instead of the operating section 106 to make settings and selections by means of speeches uttered by the user.

In this embodiment, in a case where destinations are registered as a final destination and intermediate points when the route guidance process generation section 123 generates design data for a route guidance process, the route guidance process generation section 123 may generate design data by fixing only the final destination, or may generate design data on the basis of the above-described available time and so on with respect to all destinations in a case where the destinations are registered without fixing the final destination.

In this embodiment, the above-described navigation apparatus 100 or the route guidance process generation section 123 and the route guidance process management section 124 generate design data and redesign data and perform guidance management and weather acquisition processing using the design data. However, the arrangement may be such that the navigation apparatus 100 having map data and an information recording mediumon which the map data is stored is provided with a computer and a recording medium, the above-mentioned route data generation program, management program and weather management processing program are stored on this recording medium, and the computer reads these control programs to perform the same weather management processing as that described above.

In this embodiment, a destination setting is made at the time of design data generation processing by considering weather information. A destination setting in generation processing may also be made on the basis of fellow passengers participating in a drive to a destination and information on the genre of the destination.

In such a case, if fellow passengers are lovers, a husband and wife or the like, and if such a couple visits destinations, a destination recommended as a place to visit for couples, e.g., a park where a beautiful night view can be enjoyed or a restaurant is set with priority. If fellow passengers are family members or the like, an amusement facilities spot such as a pleasure park is set with priority. More specifically, a determination is made in the above-described step S73 as to whether or not a destination is suitable for registered fellow passengers on the basis of genre information. If it is determined that the destination is suitable, the destination is displayed.

In this embodiment, the navigation apparatus of the present invention is applied to a navigation apparatus mounted on a vehicle. Needless to say, the functions in the system control sections 115, i.e., those of the map data extraction section 121, the route search section 122, the route guidance process generation section 123, the route guidance process management section 124 and the route guidance process control section 125, may be provided in a server apparatus installed in any place, and communication between the server apparatus and a terminal apparatus mounted on a vehicle may be performed via a communication circuit such as telephone public network lines and an Internet circuit to perform weather acquisition processing.

In such a case, the server apparatus stores various sorts of data necessary for weather acquisition processing for each of vehicles to perform weather acquisition processing, and the terminal apparatus has a communication section for communication with the server apparatus. The terminal apparatus transmits various sorts of data registered through an operating section, and also transmits and receives design data and control data for control of route guidance.

While in this embodiment the navigation apparatus of the present invention is applied to a navigation apparatus mounted on a vehicle, it may be applied to a portable terminal device for pedestrians.

In such a case, information on the present position of the portable terminal device may be obtained not by the GPS reception sensor 101 and the sensor section 102 but by a present position acquisition section in the portable terminal device, which obtains the information by means of radio waves for communication.

### [THIRD EMBODIMENT]

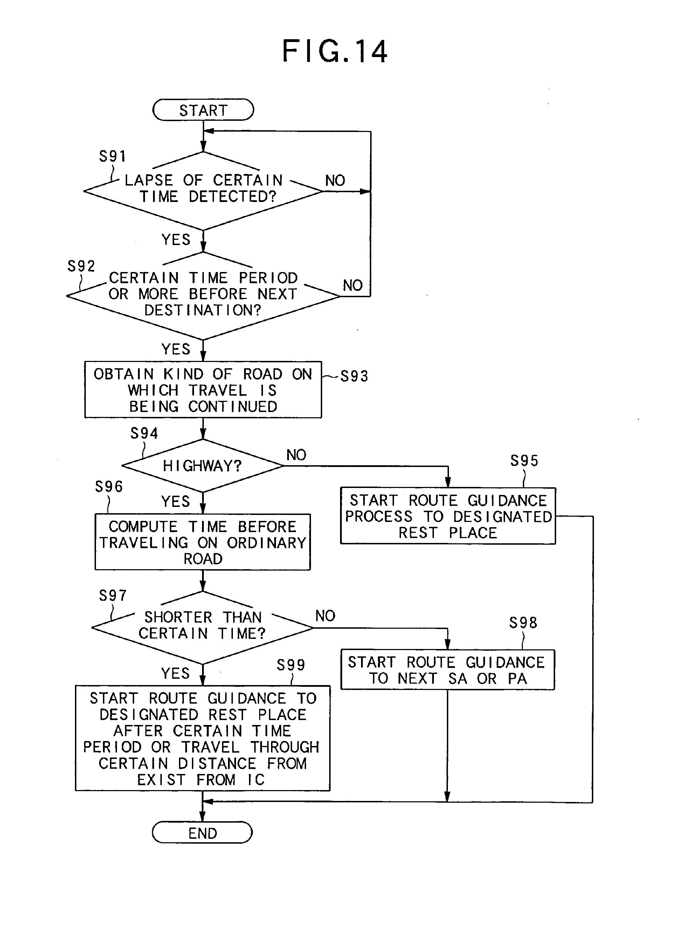

Description will be made of a third embodiment of the navigation apparatus according to the present invention with reference to FIG. 14.

A feature of this embodiment resides in that, in addition to generation of design data based on spot data on registered destinations and route guidance management in the first embodiment, a user is called on to consider a rest time and a rest place during route guidance. In other respects, the arrangement is the same as that of the first embodiment. The same components are indicated by the same reference numerals and description for the same components will not be repeated.

Description will first be made of the route guidance process control section 125 of this embodiment.

The route guidance process control section 125 enables the user to register rest time intervals and the genre of a rest place when the user sets a departure date/time, fellow passengers and rest places on the basis of display of a menu frame in the setting start processing in the first embodiment in position to the operation in the first embodiment. The route guidance process control section 125 stores the registered rest time intervals and the registered rest place genres in the ROM/RAM 116.

When route guidance is performed on the basis of selected route data, the route guidance process control section 125 calls on the user to take a rest and notifies the user of a rest place through the display section 109 or the speech processing circuit 112 on the basis of the register rest time intervals and rest place genre information registered at the time of setting start processing.

More specifically, the route guidance process control section 125 detects, on the basis of a departure time, a continuous travel time during which route guidance is continuously performed. After a lapse of a certain time period set in advance as the continuous travel time, the route guidance process control section 125 displays information that a time to take a rest has come and simultaneously displays a rest place set at the time of setting start processing or a destination belonging to a genre set as a rest place.

When the route guidance process control section 125 displays a destination belonging to a genre set as a rest place at the time of setting start processing, it notifies a destination which exists on the route on selected route data in the direction of travel of the vehicle, which is closest to the vehicle position, and which belongs to a set genre.

Further, the route guidance process control section 125 determines the kind of a road on which the vehicle travels, i.e., one of various kinds such as "highway" and "ordinary road", and notifies a rest place on the basis of selection from kinds of road.

More specifically, if the route guidance process control section 125 determines that the kind of a road on which the vehicle travels is "ordinary road", it notifies a rest place as described above. However, in a case where the kind of a road on which the vehicle is traveling is determined as "highway", a temporary stay at a destination which belongs to a certain rest place genre cannot be made even if the genre is registered in advance by the user at the time of setting start processing. In this case, therefore, the route guidance process control section 125 displays a service area (SA) or a parking area (PA) regardless of any genre set at the time of setting start processing.

In this embodiment, however, the route guidance process control section 125 does not display a service area (SA) or a parking area (PA) as a rest place in a case where a travel of the vehicle on an ordinary road in a certain time period set in advance is expected. In such a case, the route guidance process control section 125 displays the genre of a rest place set at the time of setting start processing and notifies necessary information.

Description will now be made of operations in processing for rest notification (hereinafter referred to as "rest notification processing") in the route guidance process control section 125 of this embodiment with reference to FIG. 14.

FIG. 14 is a flowchart showing operations in the rest notification processing of this embodiment.

For example, rest time intervals of two hours and a rest place genre "convenience store" are set in this processing.

When the route guidance process control section 125 initiates route guidance, it simultaneously starts measuring the continuous travel time. When the route guidance process control section 125 detects a lapse of two hours while continuously performing route guidance (step S91), it determines whether or not the time required to travel to the next destination is equal to or longer than a certain time period (step S92).

More specifically, the route guidance process control section 125 computes a time expected as the time required for travel to the next destination on the basis of an expected arrival time at the next destination and the present time, and determines whether or not the computed required time is equal to or longer than the certain time period.

For example, in this embodiment, the route guidance process control section 125 determines whether or not the time required for travel to the next destination is expected to be 45 minutes or longer.

If the route guidance process control section 125 determines that the time required for travel to the next destination is not equal to or longer than the certain time, that is, it is shorter than the certain time, the route guidance process control section 125 makes a move to processing in step S91. If the route guidance process control section 125 determines that the time required for travel to the next destination is equal to or longer than the certain time, it obtains data on the present position of the vehicle obtained by the GPS reception section 101 and the sensor section 102 and map data (step S93).

Subsequently, the route guidance process control section 125 determines the kind of the road on which the vehicle is traveling on the basis of the data on the present vehicle position and the map data (step S94).

More specifically, in this embodiment, the route guidance process control section 125 determines whether or not the road on which the vehicle is traveling is a highway.

Subsequently, if the route guidance process control section 125 determines that the road on which the vehicle is traveling is not a highway but an ordinary road, it displays information that a time to take a rest has come, notifies a destination which exists on the route on the selected route data in the direction of travel of the vehicle, which is closest to the vehicle position, and which belongs to the set genre, on the basis of the rest place genre stored in the ROM/RAM 116, and initiates route guidance to the notified destination (step S95).

If the route guidance process control section 125 determines that the road on which the vehicle is traveling is a highway, it computes the time period before a time at which the vehicle will start traveling on an ordinary load on the basis of the selected route data (step S96).

Subsequently, the route guidance process control section 125 determines whether or not the time period before a time at which the vehicle will start traveling on an ordinary load is within a time period set in advance, e.g., 30 minutes (step S97). If the route guidance process control section 125 determines that the time period before a time at which the vehicle will start traveling on an ordinary load is equal to or longer than the time period set in advance, it displays information that a time to take a rest has come, notifies a service area or a parking area which the vehicle is supposed to pass next, and initiates route guidance to the notified service area or parking area (step S98).

If the route guidance process control section 125 determines that the time period before a time at which the vehicle will start traveling on an ordinary load is within the time period set in advance, it notifies, after traveling the ordinary road through a certain distance or for a certain time period, a destination which exists on the route on the selected route data in the direction of travel of the vehicle, which is closest to the vehicle position, and which belongs to the set genre, and initiates route guidance to the notified destination (step S99).

Thus, the arrangement in this embodiment is provided with the GPS reception section 101 and the sensor section 102 that obtain present position data indicating the present position of the vehicle during route guidance performed on the basis of route data generated by the system control section 115, the route guidance process control section 125 that, during route guidance, computes a continuous vehicle travel time during which the vehicle travels continuously, and detects as the computed continuous vehicle travel time a lapse of a certain time period set in advance, and the display section 109 and the speech processing circuit 112 that presents a new destination set in advance when the route guidance process control circuit 125 detects a lapse of the time period set in advance as the continuous vehicle travel time. In this arrangement, the system control circuit 115 performs route guidance on the basis of route data generated by the route guidance process generation section 123 and the presented destination.

In this arrangement, according to this embodiment, when a lapse of the time period set in advance is detected as the continuous vehicle travel time during route guidance, a new destination such as a rest place is presented and route guidance on unvisited destinations and the presented new destination is performed.

Thus, it is not necessary to set a rest place in advance. Therefore, the navigation apparatus 100 can be provided as a navigation apparatus capable of being easily used without requiring the user to perform any troublesome operation.

The arrangement in this embodiment is also provided with the route guidance process control section 125 that identifies the kind of a travel road on which the vehicle travels on the basis of the present vehicle position obtained by the GPS reception section 101 and the sensor section 102 and map data stored in the map data storage device 105. In this arrangement, the display section 109 and the speech processing circuit 112 presents a new destination set in advance on the basis of the kind of the travel road identified and a lapse of a certain time period set in advance as the continuous vehicle travel time detected.

Thus, if selection from rest places is made on the basis of a travel road on which the vehicle travels, a rest place can be presented even in the case of travel on a highway for example, where a rest place set in advance cannot be presented. Therefore, the navigation apparatus 100 can be provided as a navigation apparatus capable of being easily used without requiring the user to perform any troublesome operation.

In this embodiment, the route guidance process control section 125 notifies a rest time and a rest place on the basis of a lapse of time in terms of continuous travel time from the beginning of route guidance. In a case where no place to have a meal is set in selected route data, however, a place to have a meal may be notified by obtaining the present time and route guidance to the place to have a meal may be performed.

In such a case, the route guidance process control section 125 allows the user to set a time to have a meal and the genre of a place to have a meal in advance at the time of setting start processing.

In this embodiment, the route guidance process management section 124 determines whether or not the vehicle exists in a certain distance range from a destination set in selected route data on the basis of information on the vehicle position obtained by the GPS reception section 101 or the sensor section 102 and map data stored in the map data storage section 105. When the route guidance process management section 124 determines that the vehicle exists in the certain distance range from the destination, it notifies introduction information for introducing points worthy of note at the destination into spot data.

In this embodiment, each setting is made through the operating section 106 in generation processing and process management processing. The arrangement may alternatively be such that the speech recognition circuit 108 is used instead of the operating section 106 to make settings and selections by means of speeches uttered by the user.

In this embodiment, in a case where destinations are registered as a final destination and intermediate points when the route guidance process generation section 123 generates design data for a route guidance process, the route guidance process generation section 123 may generate design data by fixing only the final destination, or may generate design data on the basis of the above-described available time and so on with respect to all destinations in a case where the destinations are registered without fixing the final destination.

In this embodiment, the above-described navigation apparatus 100, i.e., the route guidance process generation section 123 and the route guidance process management section 124, generate design data and redesign data and perform guidance management using the design data. However, the arrangement may be such that the navigation apparatus 100 having map data and an information recording medium on which the map data is stored is provided with a computer and a recording medium, the above-mentioned route data rest notification program is stored on this recording medium, and the computer reads the control program to perform the same rest notification processing as that described above.

### [FOURTH EMBODIMENT]

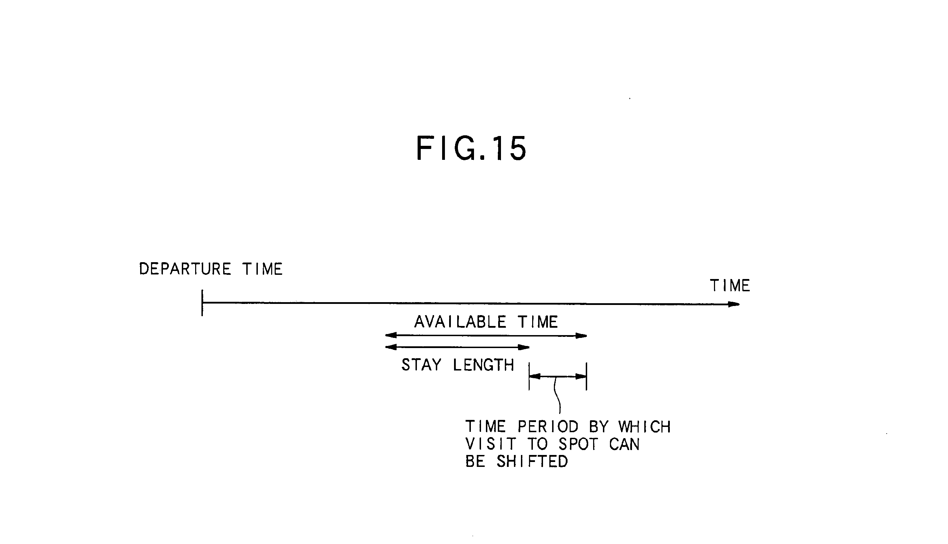

Description will be made of a fourth embodiment of the navigation apparatus according to the present invention with reference FIGs. 15 to 18.

A feature of this embodiment resides in that, at the time of generation of design data in the first embodiment, a position in visit order for a destination matching a certain condition is determined and positions in visit order for other destinations are determined on the basis of the destination having the determined position in visit order to generate the design data.

In the first embodiment, design data is generated on the basis of a departure time, stay length information and available time information contained in spot data on registered destinations.

However, if a large number of destinations are registered when design data is generated by determining positions in visit order for destinations and setting routes therebetween, the processing load is increased and the time required before the completion of computation of the design data is considerably long in the first embodiment since routes between two points on the destinations and the times required for travel through the routes are computed and since the design data is generated on the basis of the results of this computation.

In particular, a plurality of routes are ordinarily supposed to exist between two points on destinations. Therefore, the amount of processing on such routes is increased if the number of destinations is increased. For example, when the number of registered destinations is 10, the number of combinations obtained by permutation of routes between pairs of points on the destinations is 3628800. If design data is generated from these combinations, the processing load is increased.

In this embodiment, positions in visit order for destinations having a condition set in advance are first determined and other destinations not having the condition are placed between the destinations placed according to the determined positions in visit order, thus generating design data.

More specifically, in this embodiment, time periods respectively suitable for a visit to destinations (hereinafter referred to as "recommended visit time periods") are stored in advance in the map data storage section 105 as recommended visit time information in spot data on the destinations. Matching/non-matching to the conditions of the destinations are determined on the basis of the stay length information or available time information to enable setting of positions in visit order for the destinations and setting of routes and main departure and arrival times based on the positions in visit order.

For example, in this embodiment, when the route guidance process generation section 123 generates design data, it determines whether each destination has flexibility in setting a visit time or does not have the flexibility, for example, the destination is a place to have a meal or the open hours of a store or the like are restricted within a visit setting time period in spot data on the destination to determine matching/non-matching to the condition of each destination.

In other respects, the arrangement is the same as that of the first embodiment. The same components are indicated by the same reference numerals and description for the same components will not be repeated.

Description will now be made of the route guidance process generation section 123 in this embodiment with reference to FIG. 15.

FIG. 15 is a diagram for explaining setting of prior placed spot data and posteriorly placed spot data.

When spot data on destinations extracted by the spot data extraction section 121 is input, the route guidance process generation section 123 of this embodiment determines whether each input spot data group is spot data for which a position in visit order should be set earlier (hereinafter referred to as "prior placed spot data") or spot data for which a position in visit order should be set later (hereinafter referred to as "posteriorly placed spot data").

That is, the route guidance process generation section 123 performs design data generation processing (hereinafter referred to as "prior placement generation processing") setting each destination represented by prior placed spot data as a destination for which a position in visit order should be determined earlier and setting each destination represented by posteriorly placed spot data as a destination for which a position in visit order should be determined later.

More specifically, the route guidance process generation section 123 sets spot data having a condition set in advance among spot data having recommended visit time information as prior placed spot data, and spot data not having the condition set in advance as posteriorly placed spot data.

Also, in principle, the route guidance process generation section 123 sets spot data including no recommended visit time information in advance as posteriorly placed spot data.

When destinations are registered in setting start processing, the user may set a recommended visit time for each destination, and this set information may be used as recommended visit time information in spot data on the destination. In such a case, in this embodiment, processing is performed by assuming that recommended visit time information is included in spot data on registered destinations. In this embodiment, however, in a case where recommended visit time information is registered by the user, 24 hours in one day are set in time periods each consisting of several hours, for example, "early morning", "breakfast time", "forenoon", "lunch time", "afternoon", "light evening", "evening meal time", "after evening meal" and "midnight", and one time period or a group of a plurality of successive time periods among them is set, or a time period such as 10 to 12 is directly set.

More specifically, in this embodiment, the route guidance process generation section 123 subtracts a stay length indicated by stay length information in spot data or stay time set from genre information from an available time such as open hours indicated by available time information, in each spot data group having recommended visit time information, as shown in FIG. 15, and determines whether or not the result of the subtraction is equal to or shorter than a time period set in advance, thereby determining whether the spot data is prior placed spot data or posteriorly placed spot data.

That is, if the result of the subtraction is equal to or shorter than the time period set in advance, the route guidance process generation section 123 sets the spot data as prior placed spot data, and sets the other spot data groups including those having no recommended visit time information as posteriorly placed spot data.

The route guidance process generation section 123 determines a position in visit order for prior placed spot data on the basis of a use start time indicated by available time information in spot data.

For example, in this embodiment, the route guidance process generation section 123 determines positions in visit order for prior placed spot data in order from the most preceding use start time. If prior placed spot data groups having the same use start time exist, the route guidance process generation section 123 determines positions in visit order for the prior placed spot data groups in order from the most preceding use end time indicated by available time information.

That is, in this embodiment, when the route guidance process generation section 123 determines positions in visit order for prior placed spot data, it arranges the prior placed spot data in design data while referring to stay length information so that the arrival time or the departure time in each prior placed spot data group is within the available time.

The route guidance process generation section 123 does not set an arrival time before the use start time of each prior placed spot data group, and does not set a departure time after the use end time of each prior placed spot data group.

In this embodiment, determination is made as to whether or not design data can be generated even when the positions in visit order of prior placed spot data are recombined. If another design data group can be generated, the design data is generated on the basis of the positions in visit order of the prior placed spot data.

The route guidance process generation section 123 determines positions in visit order for posteriorly placed spot data on the basis of the positions in visit order of the prior placed spot data to form the design data.

For example, the route guidance process generation section 123 determines positions in visit order for posteriorly placed spot data groups in design data in which positions in visit order for prior placed spot data groups have been determined, on the basis of available time information and stay length information in the posteriorly placed spot data groups, determines whether or not the design data can be formed even after the posteriorly placed spot data groups have been placed, that is, whether or not a visit can made to each destination in time, and forms the design data.

That is, in this embodiment, the route guidance process generation section 123 determines whether or not a posteriorly placed spot data group can be placed between a prior placed spot data group of a higher position in visit order and another prior placed spot data group of the next position in visit order.

More specifically, in this embodiment, the route guidance process generation section 123 computes a departure time in a prior placed spot data group next in rank (hereinafter referred to as "next placed spot data") on the basis of a departure time from a departure point registered in setting start processing or a departure time in the immediately fore placed spot data set in advance (hereinafter referred to as "immediately fore placed spot data"), computes the time required for travel to the point corresponding to the next prior placed spot data and an arrival time in the next placed spot data, and determines whether or not the computed arrival time is before the available time in this prior placed spot data.

If the computed arrival time is before the available time in this prior placed spot data, the route guidance process generation section 123 determines whether or not posteriorly placed spot data can be placed on the basis of routes between the posteriorly placed spot data and the prior placed spot data which is placed as the posteriorly placed spot data, the required times thereof, available time information and stay length information on the posteriorly placed spot data. If the posteriorly placed spot data can be placed, that is, a visit to the next placed spot data can be made in time even after the posteriorly placed spot data has been placed, the route guidance process generation section 123 places the posteriorly placed spot data.

In this embodiment, in the case where the posteriorly placed spot data is placed between the immediately fore placed spot data and the next placed spot data, the route guidance process generation section 123 further determines whether or not other posteriorly placed spot data can be placed between the posteriorly placed spot data placed before and the next placed spot data. If the other posteriorly placed spot data can be placed, routes and so on are computed and the posteriorly placed spot data is placed to form design data, as described above.

The route guidance process generation section 123 is thus arranged to generate design data, and to generate a plurality of design data groups by changing the positions in visit order of prior placed spot data.

For example, the route guidance process generation section 123 in this embodiment constitutes a classification device, a visit order setting device, a route data generation device, a subtraction device, a comparison device and a destination group classification device of the present invention.

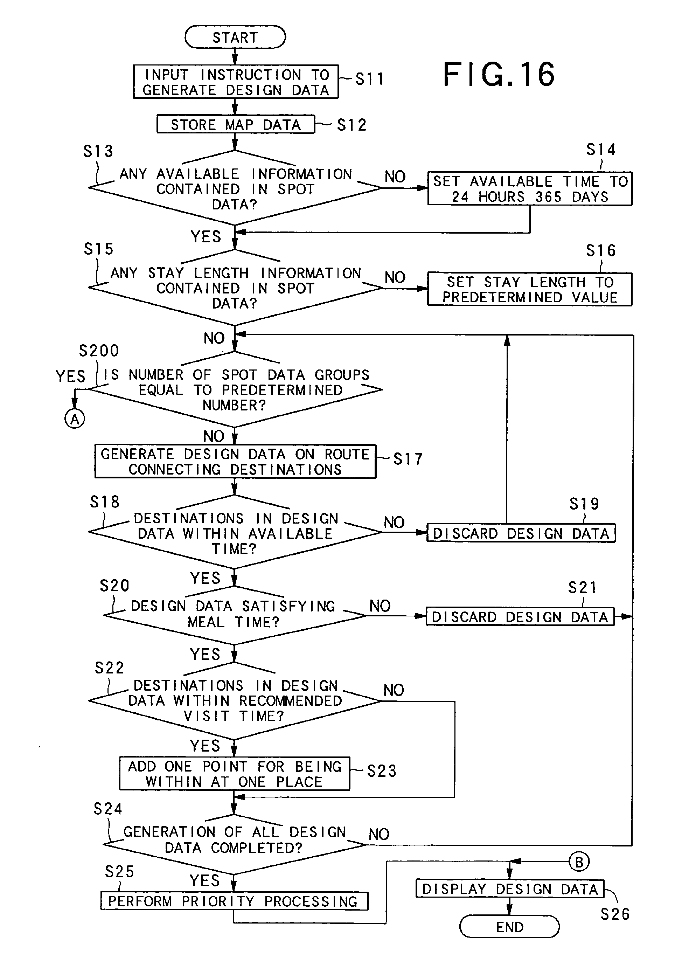

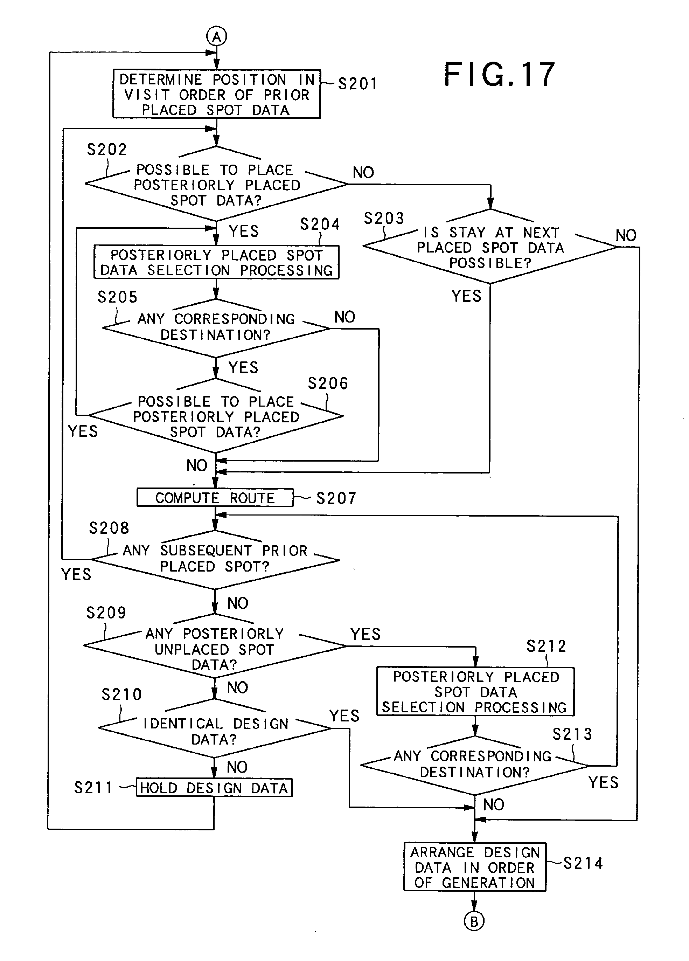

Description will now be made of operations in design data generation processing in this embodiment with reference to FIGs. 16 and 17.

FIGs. 16 and 17 are flowcharts showing operations in generation processing of this embodiment.

The same processings as those in the first embodiment are indicated by the same reference numerals. Twenty design data groups are computed in the route guidance process generation section 123, and setting start processing is completed before the processing described below, as in the case of the description of the first embodiment.

When a user inputs an instruction to the route guidance process control section 125 to generate design data (step S11), the route guidance process control section 125 makes the spot data extraction section 121 extract spot data on destinations and stores information in the spot data in the ROM/RAM 116 (step S12).

Subsequently, the route guidance process control section 125 makes the route guidance process generation section 123 determine whether or not available time information is contained in each registered spot data group (step S13). If each spot data group contains available time information, an advance to processing in the next step S15 is made.

If the route guidance process generation section 123 determines that one of the spot data groups contains no available time information, the route guidance process control section 125 makes a setting such that the available time of the destination is 24 hours over 365 days and stores this setting in the ROM/RAM 116 (step S14).

Subsequently, the route guidance process control section 125 makes the route guidance process generation section 123 determine whether or not stay length information is contained in each registered spot data group (step S15). If each spot data group contains stay length information, an advance to processing in the next step S200 is made.

If the route guidance process generation section 123 determines that one of the spot data groups contains no stay length information, the route guidance process control section 125 obtains genre information on the destination and sets an expected stay length set in advance with respect to the genre information as an expected length of stay at the destination, and stores the expected stay length in the ROM/RAM 116 (step S16).

Subsequently, the route guidance process control section 125 makes a determination as to whether the number of destinations registered in setting start processing, i.e., the number of spot data groups obtained by the route guidance process generation section 123 is equal to a number set in advance (step S200).

More specifically, if the route guidance process generation section 123 obtains six or more spot data groups, the route guidance process control section 125 makes the route guidance process generation section 123 perform prior placement processing (steps S201 to S214). If the route guidance process generation section 123 obtains a number of spot data groups smaller than six, the route guidance process control section 125 makes the route guidance process generation section 123 perform the ordinary design data generation processing, i.e., the same design data generation processing as that in the first embodiment (steps S17 to S25).

Subsequently, the route guidance process control section 125 makes the route guidance process generation section 123 generate at least one design data on a route extending via the destinations by combining the departure point, routes between pairs of points on the destinations and the required times (step S17). Ordinary design data processing is thereby performed to form each design data group.

First, the route guidance process control section 125 makes the route guidance process generation section 123 determine whether or not the arrival time and the departure time of one of the destinations in the generated design data are contained in the available time in the spot data on the destination, on the basis of available time information on the spot data on the destination in the generated design data (step S18).

If the route guidance process generation section 123 determines, with respect to at least one of the destinations, that the arrival time and the departure time are not contained in the available time in the spot data on the destination, the route guidance process control section 125 makes the route guidance process generation section 123 discard the generated design data (step S19) andmakes amove to step S17 for generation of the next design data.

If the route guidance process generation section 123 determines, with respect each of the destinations in the generated design data, that the arrival time and the departure time are contained in the available time in the spot data on the destination, the route guidance process control section 125 makes the route guidance process generation section 123 determine whether or not the arrival time and the departure time of the destination having genre information indicating a place to have a meal are contained in a meal time period set in advance (step S20).

If the route guidance process generation section 123 determines that the arrival time and the departure time of the destination that is a place to have a meal in the generated design data are not contained the meal time period set in advance, the route guidance process control section 125 makes the route guidance process generation section 123 discard the generated design data (step S21) andmakes a move to step S17 for generation of the next design data.

If the route guidance process generation section 123 determines that the arrival time and the departure time of the destination that is a place to have a meal in the generated design data are contained the meal time period set in advance, the route guidance process control section 125 makes the route guidance process generation section 123 compute a degree of priority for the generated design data on the basis of recommended visit time information in the spot data on the destinations in the generated design data, as described above (steps S22, S23).

Subsequently, the route guidance process control section 125 makes the route guidance process generation section 123 determine whether or not all the design date groups have been generated (step S24). If generation of all the design data groups is not completed, a move to processing in step S17 is made.

If the route guidance process generation section 123 determines that all the design date groups have been generated, the route guidance process control section 125 makes the route guidance process generation section 123 perform the above-describedpriority processing on the basis of the degrees of priority (step S25), makes the display section 109 display the design data groups in descending order of priority (step S26), and terminates generation processing.

If in step S200 the route guidance process generation section 123 obtains a number of spot data groups equal to or larger than six, the route guidance process control section 125 makes the route guidance process generation section 123 perform processing described below as prior placement processing.

The route guidance process control section 125 first makes the route guidance process generation section 123 set each of the spot data groups obtained by the data extraction section 121 as prior placed spot data as posteriorly placed spot data.

More specifically, the route guidance process generation section 123 determines the existence/nonexistence of visit recommendation information in the spot data on the destinations registered at the time of setting start processing, and sets the spot data having a condition set in advance as prior placed spot data on the basis of available time information and stay length information in the obtained spot data in the spot data having visit recommendation information.

The route guidance process generation section 123 sets as posteriorly placed spot data the spot data having no recommended visit time information and the spot data not having the condition set advance.

In a case where the number of spot data groups obtained by the route guidance process generation section 123 is equal to the number set in advance, operations described below are performed.

The route guidance process control section 125 first makes the route guidance process generation section 123 determine the order of placement of prior placed spot data groups on the basis of the spot data set in the prior placed spot data groups (step S201).

More specifically, the route guidance process generation section 123 determines the placement order in order from the most preceding use start time in available time on the basis of available time information on the spot data.

If some of the spot date groups have the same use start time, the route guidance process generation section 123 determines the placement order from the most preceding use end time in service end times or the like. When the route guidance process generation section 123 performs the same processing next time or later, it determines a visit order of a combination of the prior placed spot data groups different from the visit order of the combination of prior placed spot data items already determined.

Subsequently, the route guidance process control section 125 makes the route guidance process generation section 123 execute placement processing for placing posteriorly placed spot data groups between the prior placed spot data groups in order from the prior placed spot data group placed at the top on the basis of the order of placement of the prior placed spot data groups, as described below.

The route guidance process control section 125 first makes the route guidance process generation section 123 determine whether or not a posteriorly placed spot data group can be placed between the immediately fore placed spot data group and the next prior placed spot data group (step S202).

More specifically, the route guidance process generation section 123 computes an arrival time in the next placed spot data by combining a route between two points at the positions of the departure point or the immediately fore prior placed spot data and the next placed spot data and the required time therebetween, and determines whether or not the computed arrival time is before the use start time in the next placed spot data.

If the route guidance process generation section 123 determines that the posteriorly placed spot data cannot be placed between the immediately fore prior placed spot data and the next placed spot data, the route guidance process control section 125 makes the route guidance process generation section 123 determine whether or not a stay at the next placed spot data is possible (step S203).

If the route guidance process generation section 123 determines that a stay at the next placed spot data is possible, the route guidance process control section 125 makes an advance to processing in step S207. If the route guidance process generation section 123 determines that a stay at the next placed spot data is not possible, the route guidance process control section 125 makes a move to processing in step S214.

If the route guidance process generation section 123 determines that the posteriorly placed spot data can be placed between the immediately fore prior placed spot data and the next placed spot data, the route guidance process control section 125 makes the route guidance process generation section 123 perform posteriorly placed spot data selection processing (step S204). In this posteriorly placed spot data selection processing, the route guidance process generation section 123 determines the existence/nonexistence of the selected posteriorly placed spot data (step S205).

Operations in posteriorly placed spot data selection processing in this embodiment will be described below. In this selection processing, one posteriorly placed spot data group is selected even if a plurality of posteriorly placed spot data groups not placed yet exist.

If the route guidance process generation section 123 determines in posteriorly placed spot data selection processing that any posteriorly placed spot data groups cannot be selected, the route guidance process control section 125 makes an advance to processing in step S208.

If the route guidance process generation section 123 determines in posteriorly placed spot data selection processing that a posteriorly placed spot data group can be selected, the route guidance process control section 125 makes the route guidance process generation section 123 determine whether or not posteriorly placed spot data can be placed between the next placed spot data and the selected posteriorly placed spot data (step S206), as in step S202.

More specifically, the route guidance process generation section 123 computes an arrival time in the posteriorly placed spot data by combining a route between two points at the positions of the next placed spot data and the selected posteriorly placed spot data and the required time therebetween, and determines whether or not the computed arrival time is before the use start time.

If the route guidance process generation section 123 determines that the another posteriorly placed spot data group (hereinafter referred to as "posteriorly unplaced spot data") can be placed between the next placed spot data and the selected posteriorly placed spot data, an advance to processing in step S205 is made. If the route guidance process generation section 123 determines that the posteriorly unplaced spot data group cannot be placed between the next placed spot data and the selected posteriorly placed spot data, an advance to processing in step S208 is made.

Subsequently, the route guidance process control section 125 makes the route guidance process generation section 123 compute a route from the departure point or immediately fore next placed spot data to the next placed spot data. If posteriorly placed spot data has been selected, the route guidance process generation section 123 computes a corresponding route via the posteriorly placed spot data (step S207).

At this time, the route guidance process generation section 123 computes not only the route but also the spot data, i.e., the arrival time and the departure time of the destination.

Subsequently, the route guidance process control section 125 makes the route guidance process generation section 123 determine the existence/nonexistence of prior placed spot data subsequent in visit order to the next placed spot data (step S208). If the route guidance process generation section 123 detects prior placed spot data subsequent in visit order, a move to processing in step S202 is made to perform processing including placement of posteriorly placed spot data. If the route guidance process generation section 123 detects no prior placed spot data subsequent in visit order, the route guidance process control section 125 determines that all the prior placed placement data has been placed as set data and makes an advance to step S209.

Subsequently, the route guidance process control section 125 makes the route guidance process generation section 123 determine the existence/nonexistence of posteriorly unplaced spot data not yet placed in the design data (step S209).

If the route guidance process generation section 123 detects no unplaced spot data, the route guidance process control section 125 makes the route guidance process generation section 123 determine identity/non-identity to design data already generated (step S210).

If the route guidance process generation section 123 determines identity to design data already generated, the route guidance process control section 125 makes move to processing to step S214.

If the route guidance process generation section 123 determines non-identity to design data already generated, the route guidance process control section 125 holds the generated design data (step S211) and makes a move to processing in step S201 to generate new design data.

In the case where the route guidance process generation section 123 determines identity to design data already generated, processing in step S201 and processing in step S227 described below are unified, so that it can be determined that no further new data can be generated. The route guidance process control section 125 then makes a move to step S214 to display the held design data.

If the route guidance process generation section 123 detects unplaced spot data, the route guidance process control section 125 makes the route guidance process generation section 123 perform posteriorly placed spot data selection processing (step S212), as in step S204, and determine the existence/nonexistence of the selected posteriorly placed spot data in posteriorly placed spot data selection processing (step S213).

In step S212, the route guidance process generation section 123 performs, in principle, posteriorly placed spot data selection processing between the immediately fore prior placed spot data and the detected unplaced spot data. If two or more posteriorly placed spot data groups are incorporated after the prior placed spot data finally placed in placement order, the route guidance process generation section 123 performs posteriorly placed spot data selection processing between the posteriorly placed spot data finally incorporated and the detected posteriorly placed spot data.

Operations in posteriorly placed spot data selection processing in this embodiment will be described below.

If the route guidance process generation section 123 determines that one posteriorly placed spot data group can be selected in posteriorly placed spot data selection processing, the route guidance process control section 125 makes a move to step S209.

If the route guidance process generation section 123 determines that any one posteriorly placed spot data group cannot be selected in posteriorly placed spot data selection processing, a move to processing in step S214 is made.

Subsequently, the route guidance process control section 125 arranges the generated design data in the order of generation (step S214), makes a move to step S26 and thereafter terminates the processing.

When the design data is displayed on the display section 109 in step S26, the design data is displayed in the order of generation, as in the case of the first embodiment. However, in a case where no design data can be generated, the system control section 115 displays information that no design data can be generated, and spot data with a problem at the time of generation, in the design data first generated, as shown with respect to the first embodiment.

Thus, in this embodiment, design data is generated. When generated design data is provided or when, in the case of generation of a plurality of design groups, one of them is selected as in the first embodiment, actual route guidance based on the selected design data, i.e., selected data, is performed and route guidance management processing is executed.

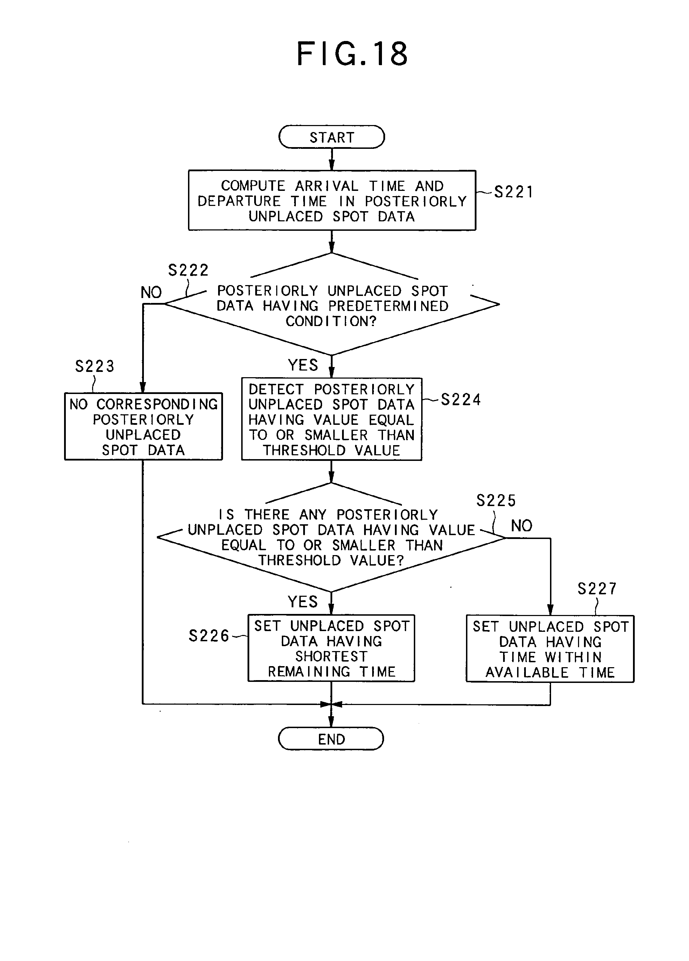

Description will now be made of operations in posteriorly placed spot data selection processing in this embodiment with reference to FIG. 18.

FIG. 18 is a flowchart showing operations inposteriorly placed spot data selection processing.

Operations in this processing are performed in step S204 or step S212 of design data generation processing.

First, the route guidance process control circuit 125 makes the route guidance process generation section 123 compute a route between the immediately fore placed spot data or immediately preceding posterior placed spot data (hereinafter referred to also as "immediately fore placed spot data") in a case where posteriorly placed spot data selection processing has already been performed once (step S212) and one of posteriorily unplaced spot data groups not yet placed, and compute an arrival time and a departure time in the posteriorily unplaced spot data on the basis of a stay length set according to stay length information in the posteriorily unplaced spot data or genre information (step S221).

More specifically, as described above, the route guidance process generation section 123 computes a route between two points at the positions of the spot data groups and the required time therebetween and computers an arrival time in the posteriorily unplaced spot data on the basis of the departure time in the immediately fore placed spot data. The route guidance process generation section 123 also computes a departure time in the posteriorily unplaced spot data on the basis of the computed arrival time and the stay length.

Subsequently, the route guidance process control section 125 makes the route guidance process generation section 123 determine whether or not the posteriorily unplaced spot data has a predetermined condition on the basis of the arrival time and the departure time in the posteriorily unplaced spot data (step S222).

More specifically, in the case of step S204, the route guidance process generation section 123 determines whether or not the arrival time and the departure time in the posteriorily unplaced spot data are contained in the available time in the posteriorily unplaced spot data, and also determines whether or not the posteriorily unplaced spot data can be placed between the unplaced spot data and the next fore placed spot data, as it does in step S202.

In the case of step S212, the route guidance process generation section 123 only determines whether or not the arrival time and the departure time in the posteriorily unplaced spot data are contained in the available time in the posteriorily unplaced spot data.

If the route guidance process generation section 123 determines that any of the posteriorily unplaced spot data groups does not have the predetermined condition, the route guidance process control section 125 determines that there is no matching posteriorily unplaced spot data (step S223), and terminates this processing.

If the route guidance process generation section 123 determines that at least one of the posteriorily unplaced spot data groups has the predetermined condition, the route guidance process control section 125 makes the route guidance process generation section 123 detect the posteriorily unplaced spot data groups having an available time equal to or sorter than a threshold value (step S224).

Subsequently, the route guidance process control section 125 makes the route guidance process generation section 123 determine the existence/nonexistence of the posteriorily unplaced spot data groups having an available time equal to or sorter than the threshold value (step S225).

If the route guidance process generation section 123 detects the posteriorily unplaced spot data groups having an available time equal to or sorter than the threshold value, the route guidance process control section 125 makes the route guidance process generation section 123 set the posteriorily unplaced spot data group having the shortest remaining available time in the detected posteriorily unplaced spot data groups as a selected posteriorily unplaced spot data group (step S226), and terminates this processing.

If the route guidance process generation section 123 detects no posteriorily unplaced spot data group having an available time equal to or sorter than the threshold value, the route guidance process control section 125 makes the route guidance process generation section 123 set the posteriorily unplaced spot data group having an arrival time within the available time in the detected posteriorily unplaced spot data groups as a selected posteriorily unplaced spot data group (step S227), and terminates this processing.

More specifically, in step S227, the route guidance process generation process 123 counts the number of times processing in step S227 is performed in correspondence with processing in step S204 and S212 when one design data group is generated in generation processing, and sets posteriorily unplaced spot data groups on the basis of the number of times the processing is performed and the number of groups of data held for the present design data.

For example, when no design is set, that is, the number of held design data groups is "0", the route guidance process generation section 123 selects the posteriorily unplaced spot data group forming the shortest route in the detected posteriorily unplaced spot data groups each having an arrival time contained in an available time, regardless of the number of times the processing is performed.

When the number of held design data groups is "1", the route guidance process generation section 123 selects the spot data group forming the second shortest route only when the number of times the processing is performed is 1, and selects the spot data group forming the shortest route with respect to any other number indicating the number of times the processing is performed.

Further, when the number of held design data groups is "2", the route guidance process generation section 123 selects the spot data group forming the second shortest route only when the number of times the processing is performed is 1 or 2, and selects the spot data group forming the shortest route with respect to any other number indicating the number of times the processing is performed.

Thus, the arrangement in this embodiment is provided, so that the route guidance process generation section 123 classifies the destinations into prior placed spot data groups presenting some of the destinations whose positions in visit order are to be first determined, and posteriorly placed spot data groups representing the other destinations, on the basis of stay length information and available time information in the spot data groups, sets positions in visit order for the classified prior placed spot data groups, and generates data on a route from a departure point to one of the destinations including at least an expected arrival time at the destination, on the basis of the set positions in visit order of the prior placed spot data groups, obtained data on the location of the departure point, spot data on the registered destinations and map data, in a case where a plurality of destinations are registered by means of the operating section 106.

In this arrangement, according to this embodiment, data on a route from a departure point to one of the destinations including at least an expected arrival time at the destination is generated on the basis of the set positions in visit order of the prior placed spot data groups, obtained data on the location of the departure point, spot data on the registered destinations and map data.

Therefore, when design data is generated by determining the order in which the destinations are visited and setting a route for visiting the destinations, route data can be generated while fixing the positions in visit order of some of the destinations where the available time such as service time is so short that the visit order cannot be suitably determined, even if the number of destinations to be registered is large. Consequently, the processing load can be reduced with respect to generation of route data, and the time required for processing before the completion of generation of the route data can be reduced.

The arrangement in this embodiment is also provided, so that the route guidance process generation section 123 subtracts a stay length indicated by stay length information from an available time indicated by available time information, compares the time obtained by this subtraction with a value set in advance, and classification into prior placed spot data and posteriorly placed spot data on the basis of the result of this comparison.

In this arrangement, according to this embodiment, the stay length is subtracted from the available time, the time obtained by this subtraction is compared with a value set in advance, and classification into prior placed spot data and posteriorly placed spot data is performed on the basis of the result of this comparison.

Therefore, when design data is generated by determining the order in which the destinations are visited and setting a route for visiting the destinations, the positions in visit order of some of the destinations where the available time such as service time is so short that the visit order cannot be suitably determined can be set as prior placed spot data, i.e., destinations whose positions in visit order are first fixed.

The arrangement in this embodiment is also provided, so that the route guidance process generation section 123 generates data on a route from a departure point to one of destinations including at least an expected arrival time at the destination, on the basis of available time information and stay length information on the destinations and the set positions of prior placed spot data groups in visit order, while setting the positions of posteriorly placed spot data groups.

In this arrangement, according to this embodiment, data on a route from a departure point to one of destinations including at least an expected arrival time at the destination is generated on the basis of available time information and stay length information on the destinations and the set positions of prior placed spot data groups in visit order, while setting the positions of posteriorly placed spot data groups.

Therefore, some of the destinations where the available time such as service time is so short that the visit order cannot be suitably determined can be considered, and posteriorly placed spot data groups having positions in visit order which can be determined as desired can be incorporated in an arrangement of prior placed spot data groups having fixed positions in visit order. Consequently, the processing load can be reduced with respect to generation of route data, the time required for processing before the completion of generation of the route data can be reduced, and the destinations suitably registered can be reflected in design data.

Also in this embodiment, each setting is made through the operating section 106 in generation processing and process management processing.

However, the speech recognition circuit 108 may be used instead of the operating section 106 to make settings and selections by means of speeches uttered by the user.

In this embodiment, in a case where destinations are registered as a final destination and intermediate points when the route guidance process generation section 123 generates design data for a route guidance process, the route guidance process generation section 123 may generate design data by fixing only the final destination, or may generate design data on the basis of the above-described available time and so on with respect to all destinations in a case where the destinations are registered without fixing the final destination.

In this embodiment, the above-described navigation apparatus 100, or the route guidance process generation section 123 and the route guidance process management section 124 generate design data and redesign data and perform guidance management using the design data. However, the arrangement may be such that the navigation apparatus 100 having map data and an information recording medium on which the map data is stored is provided with a computer and a recording medium, the above-mentioned route data generation program and management program are stored on this recording medium, and the computer reads these control programs to perform the same generation processing and management processing as those described above.

In this embodiment, the navigation apparatus of the present invention is applied to a navigation apparatus mounted on a vehicle. Needless to say, the functions in the system control sections 115, i.e., those of the map data extraction section 121, the route search section 122, the route guidance process generation section 123, the route guidance process management section 124, the route guidance process control section 125, may be provided in a server apparatus installed in any place, communication between the server apparatus and a terminal apparatus mounted on a vehicle may be performed via a communication circuit such as an Internet circuit, and the server apparatus may perform generation processing.

In such a case, the server apparatus stores various sorts of data including design data necessary for generation processing for each of vehicles, and the terminal apparatus has a communication section for communication with the server apparatus. The terminal apparatus transmits various sorts of data registered through an operating section, and also transmits and receives design data and control data for control of route guidance to perform generation processing.

While in this embodiment the navigation apparatus of the present invention is applied to a navigation apparatus mounted on a vehicle, it may be applied to a portable terminal device for pedestrians.

In such a case, information on the present position of the portable terminal device may be obtained not by the GPS reception sensor 101 and the sensor section 102 but by a present position acquisition section in the portable terminal device, which obtains the information by means of radio waves for communication.

## Claims

1. A navigation apparatus **characterized by** said navigation apparatus comprising:
a departure point data acquisition device (123) which obtains departure point data including at least location data of a departure point from which a mobile unit departs;
a registration device (106, 108) which registers a destination to be reached by the mobile unit;
a spot data acquisition device (121) which obtains spot data on the registered destination including at least location data indicating the location of the destination, stay length information representing information on an expected stay length at the destination and available time information indicating available dates and times of the destination;
a storage device (105) which stores map data;
a generation device (123) which generates route data from the departure point to the destination including at least an expected arrival time at the destination on the basis of the obtained departure point data, the spot data on the registered destination and the map data; and
a route guidance device (115) which performs route guidance from the departure point to the destination on the basis of the generated route data.

2. The navigation apparatus according to claim 1, wherein, in a case where a plurality of destinations are registered by said registration device,
said generation device generates the route data on a route extending from the departure point to one destination to another in the destinations.

3. The navigation apparatus according to claim 1, further comprising a notification device (109, 112) which notifies at least one of destination information representing information on the destination including at least the expected arrival time at the destination in the route data generated by said generation device, and the generated route data.

4. The navigation apparatus according to claim 3, wherein, in a case where the destination information includes at least one of a name of the registered destination, an expected departure time indicating an expected time of departure from the destination in the route data, and a stay length representing an expected stay length at the destination in the route data,
said notification device notifies at least one of information on the name of the destination, the expected arrival time, the expected departure time, and the stay length.

5. The navigation apparatus according to claim 4, wherein, in a case where a plurality of route data are generated by said generation device, and where said notification device notifies the plurality of the generated route data,
said navigation apparatus comprises:
a selection device (106, 108) which selects one of the plurality of the notified route data; and
said route guidance device performs the route guidance from the departure point to the destination on the basis of the selected route data.

6. The navigation apparatus according to claim 3, wherein said generation device comprises:
a required time computation device (123) which computes required time required for the entire process according to the route data; and
a route generation device (123) which generates the route data on the basis of the computed route data required time.

7. The navigation apparatus according to claim 1, wherein, in a case where said departure point data acquisition device obtains as departure point data a departure date and time from the departure point and the location of the departure point,
said generation device comprises:
a search device which searches routes to the destination on the basis of the map data and the location data of the destination, and outputs at least one route as a search result;
a determination device (123) which determines whether or not a visit can be made within the period of the available date and time of the registered destination on the basis of the obtained departure point data, the output search result, the stay length information at the destination and the available information of the destination; and
a data generation device (123) which generates the route data from the departure point to the destination on the basis of the result of the determination.

8. The navigation apparatus according to claim 7, further comprising said notification device, wherein, in a case where said determination device determines that a visit to at least one destination cannot be made on the basis of the stay length information at the destination and the available time information of the destination,
said notification device notifies that the visit to at least one destination cannot be made.

9. The navigation apparatus according to claim 7, wherein said determination device comprises:
an expected time computation device (123) which computes the expected arrival time and the expected departure time on the basis of the departure point data obtained by said departure point data acquisition device, the search results output from said search device and the stay length information at the destination obtained by said spot data acquisition device; and
an available time determination device (123) which determines whether or not the computed expected arrival time and the computed expected departure time are contained in the available date and time indicated by the available time information of the destination.

10. The navigation apparatus according to claim 7, further comprising said notification device, wherein, in a case where said determination device determines that a visit to at least one destination cannot be made on the basis of the stay length information at the destination and the available time information of the destination,
said determination device comprises:
a stay length determination device (123) which determines whether or not the destination to which a visit cannot be made can be made visitable by changing the stay length indicated by the stay length information at the destination; and
a stay length change computation device (123) which computes a change in stay length when it determines that the non-visitable destination can be visited if the stay length is changed, and
wherein said notification device notifies the computed change in stay length to be made.

11. The navigation apparatus according to claim 1, wherein said spot data acquisition device obtains genre information indicating a genre of the registered destination and obtains the stay length information at the registered destination on the basis of the obtained genre information.

12. The navigation apparatus according to claim 1, further comprising a time setting device (106, 108, 125) which sets the stay length information in advance by associating the stay length information with the spot data,
wherein said spot data acquisition device obtains the set stay length information at the time of obtaining the spot data.

13. The navigation apparatus according to claim 3, wherein, in a case where a plurality of route data are generated by said generation device,
said generation device comprises a priority computation device (123) which computes a priority for each of the route data in relation to the others on the basis of the spot data on the registered destination, and
said notification device notifies one of each route data and the destination information in the route data on the basis of the computed required times of the route data and the computed priorities for the route data.

14. The navigation apparatus according to claim 13, wherein, in a case where the spot data includes at least one of genre information indicating a genre of the destination and weather information indicating whether or not a visit can be made according to weather of the destination,
said priority computation device computes the priority for each of the route data in relation to the others on the basis of the spot data on the registered destination.

15. The navigation apparatus according to claim 1, further comprising said notification device, wherein, in a case where the spot data includes at least one of genre information indicating a genre of the destination and weather information indicating whether or not a visit can be made according to weather of the destination,
said notification device notifies at least one of the genre information or the weather information on the destination registered by said registration device, when the route data is generated by said generation device.

16. The navigation apparatus according to any one of claims 1 to 15, wherein, in a case where the route guidance is performed by said route guidance device on the basis of the generated route data,
said navigation apparatus comprises:
a present position acquisition device (101, 102) which obtains present position data indicating a present position of the mobile unit while the route guidance is performed;
a predicted time computation device (124) which computes, during the route guidance, a predicted arrival time at which arrival at the registered destination will occur, on the basis of the obtained present position data of the mobile unit; and
a regeneration device which regenerates route data on a route from the obtained present position of the mobile unit to an unvisited destination set in the route data but not yet visited, on the basis of the expected arrival time and the computed predicted arrival time, and
wherein said route guidance device performs route guidance on the basis of the regenerated route data.

17. The navigation apparatus according to claim 16, wherein said regeneration device comprises:
a time difference computation device (124) which computes the time difference between the expected arrival time and the computed predicted arrival time;
a regeneration determination device which determines whether or not a route to the unvisited destination set in the route data shouldbe regenerated on the basis of the computed time difference; and
a route regeneration device (124) which performs regeneration of the route data when said regeneration determination device determines that the route to the unvisited destination should be regenerated.

18. The navigation apparatus according to claim 16, wherein said regeneration determination device comprises:
an addition/deletion determination device which determines, on the basis of the time difference computed by said time difference computation device, at least one of addition of a destination to be newly set as an intermediate destination and removal of a destination set in the route data; and
a decision device (124) which decides, on the basis of the result of the determination made by said addition/deletion determination device,whether or not a route to the unvisited destination set in the route data should be regenerated.

19. The navigation apparatus according to claim 14, wherein, in a case where the spot data includes weather information, and route guidance is performed on the basis of the generated route data by said route guidance device,
said navigation apparatus comprises:
a present position acquisition device (101, 102) which obtains present position data indicating a present position of the mobile unit while the route guidance is performed;
a weather information acquisition device which obtains weather forecast information on the destination set in the route data during the route guidance; and
a regeneration device which regenerates route data on a route from the obtained present position of the mobile unit to an unvisited destination set in the route data but not yet visited, on the basis of the obtained weather forecast information on the destination and the weather information obtained by said spot data acquisition device, and
wherein said route guidance device performs the route guidance on the basis of the regenerated route data.

20. The navigation apparatus according to claim 19, wherein said regeneration device comprises:
an addition/deletion determination device which determines, on the basis of the weather forecast information on the destination obtained by said weather information acquisition device and the weather information on the destination obtained by said spot data acquisition device, at least one of addition of a destination to be newly set as an intermediate destination and removal of a destination set in the route data; and
a decision device (124) which decides, on the basis of the result of the determination made by said addition/deletion determination device, whether or not a route to the unvisited destination set in the route data should be regenerated.

21. The navigation apparatus according to claim 16, wherein, in a case where a plurality of the unvisited destinations exist when the route guidance device performs route guidance on the basis of the route data,
said regeneration device regenerates the route data on the route from the obtained present position of the mobile unit to the unvisited destination by rearranging the visit order of the unvisited destinations.

22. The navigation apparatus according to any one of claims 1 to 15, wherein, in a case where route guidance is performed on the basis of the generated route data by said route guidance device,
said navigation apparatus comprises:
a present position acquisition device (101, 102) which obtains present position data indicating a present position of the mobile unit while the route guidance is performed;
a travel time computation device (124) which, during the route guidance, computes a continuous travel time during which the mobile unit travels continuously;
a detection device (125) which detects that the computed continuous travel time of the mobile unit lapses away for a certain time period set in advance; and
a presentation device (109, 112) which presents the destination set in advance as a new destination when said detection device detects that the computed continuous travel time of the mobile unit lapses away for the time period set in advance,
wherein said route guidance device performs the route guidance on the basis of the route data generated by said generation device and the presented destination.

23. The navigation apparatus according to claim 22, further comprising an identification device which identifies a kind of a travel road on which the mobile unit travels on the basis of the present position of the mobile unit obtained by said present position data acquisition device and the map data stored in the storage device,
wherein said presentation device presents the destination set in advance as a new destination on the basis of the kind of the travel road identified by said identification device and the fact that the detected continuous travel time of the mobile unit detected by said detection device lapses away for the time period set in advance.

24. The navigation apparatus according to claim 16, further comprising said notification device, wherein,
said notification device notifies the route data is regenerated by said regeneration device.

25. The navigation apparatus according to claim 24, further comprising a regeneration selection device (106, 108) which selects whether or not the route guidance should be performed based on the route data regenerated by said regeneration device, when the regeneration of the route data is notified by said notification device,
wherein said route guidance device perform the route guidance on the basis of the regenerated route data when said regeneration selection device selects that the route guidance is performed.

26. The navigation apparatus according to any one of claims 1 to 15, wherein, in a case where the route guidance is performed on the basis of the route data generated by said route guidance device, and where the destination information includes guide information of the destination,
said navigation apparatus further comprises:
a present position acquisition device (101, 102) which obtains present position data indicating a present position of the mobile unit while the route guidance is performed;
a distance computation device (124) which computes a distance to the destination on the basis of the obtained present position of the mobile unit;
a distance determination device (124) which determines whether or not the computed distance to the destination is within a distance range set in advance; and
a presentation device which presents the guide information when said distance determination device determines that the computed distance to the destination is within the distance range set in advance.

27. A navigation method **characterized by** said navigation method comprising:
a departure point data acquisition process which obtains departure point data including at least location data of a departure point from which a mobile unit departs;
a registration process which registers a destination to be reached by the mobile unit;
a spot data acquisition process which obtains spot data on the registered destination including at least location data indicating the location of the destination, stay length information representing information on an expected stay length at the destination and available time information indicating available dates and times of the destination;
a map data acquisition process which obtains map data stored in a storage device;
a generation process which generates route data from the departure point to the destination including at least an expected arrival time at the destination on the basis of the obtained departure point data, the spot data on the registered destination and the map data; and
a route guidance process which performs route guidance from the departure point to the destination on the basis of the generated route data.

28. The navigation method according to claim 27, wherein said route guidance process includes:
a present position acquisition process which obtains present position data indicating a present position of the mobile unit while the route guidance is performed;
a predicted time computation process which computes a predicted arrival time at which arrival at the registered destination will occur, on the basis of the obtained present position data of the mobile unit; and
a regeneration process which regenerates route data on a route from the obtained present position of the mobile unit to an unvisited destination set in the route data but not yet visited, on the basis of the expected arrival time and the computed predicted arrival time.

29. A route data generation program for generating route data relating to route guidance of a mobile unit by a computer, **characterized by** said route data generation program making the computer function as:
a departure point data acquisition device which obtains departure point data including at least location data of a departure point from which a mobile unit departs;
a registration device which registers a destination to be reached by the mobile unit;
a spot data acquisition device which obtains spot data on the registered destination including at least location data indicating the location of the destination, stay length information representing information on an expected stay length at the destination and available time information indicating available dates and times of the destination;
a map data acquisition device which obtains map data stored in a storage device;
a generation device which generates route data from the departure point to the destination including at least an expected arrival time at the destination on the basis of the obtained departure point data, the spot data on the registered destination and the map data; and
a route guidance device which performs route guidance from the departure point to the destination on the basis of the generated route data.

30. The route data generation program according to claim 29, wherein, in a case where the route guidance is performed on the basis of the generated route data, said route data generation program makes the computer function as:
a present position acquisition device which obtains present position data indicating a present position of the mobile unit while the route guidance is performed;
a predicted time computation device which computes a predicted arrival time at which arrival at the registered destination will occur, on the basis of the obtained present position data of the mobile unit; and
a regeneration device which regenerates route data on a route from the obtained present position of the mobile unit to an unvisited destination set in the route data but not yet visited, on the basis of the expected arrival time and the computed predicted arrival time.

31. A recording medium on which the route data generation program according to claim 29 is recorded so as to be readable with a computer.

32. A server apparatus in a navigation system, **characterized by** said server apparatus comprising:
a reception device which receives departure point data including at least location data of a departure point of a mobile unit registered by a terminal device departs, and a destination which is to be reached by the mobile unit;
a spot data acquisition device which obtains spot data on the registered destination including at least location data indicating the location of the destination, stay length information representing information on an expected stay length at the destination and available time information indicating available dates and times of the destination;
a storage device which stores map data;
a generation device which generates route data from the departure point to the destination including at least an expected arrival time at the destination on the basis of the obtained departure point data, the spot data on the registered destination and the map data; and
a route guidance control device which controls route guidance in said terminal device from the departure point to the destination on the basis of the generated route data.

33. The server apparatus in the navigation system according to claim 32, wherein, in a case where the route guidance of said terminal device is controlled by said route guidance control device on the basis of generated the route data ,
said server apparatus comprises:
a present position acquisition device which obtains present position data indicating a present position of the mobile unit while the route guidance is performed;
a predicted time computation device which computes, during the route guidance, a predicted arrival time at which arrival at the registered destination will occur, on the basis of the obtained present position data of the mobile unit; and
a regeneration device which regenerates route data on a route from the obtained present position of the mobile unit to an unvisited destination set in the route data but not yet visited, on the basis of the expected arrival time and the computed predicted arrival time,
wherein said route guidance control device controls the route guidance in said terminal device on the basis of the regenerated route data.

34. The navigation apparatus according to claim 1, wherein, in a case where a plurality of destinations are registered by said registration device,
said generation device comprises:
a classification device (123) which classifies the plurality of the destinations into a first destination group representing some of the destinations having positions in visit orders which should be first determined, and a second destination group representing the other destinations, on the basis of the stay length information and the available time information in the spot data;
a visit order setting device (123) which sets the positions in visit orders of the classified first destination group; and
a route data generation device (123) which generates route data on a route from the departure point to the destination including at least an expected arrival time at the destination, on the basis of the set positions in visit order of the first destination group, the obtained departure point data, the registered spot data on the destination and the map data.

35. The navigation apparatus according to claim 34, wherein said classification device comprises:
a subtraction device (123) which subtracts the stay length indicated by the stay length information from the available time indicated by the available time information;
a comparison device (123) which compares the time obtained by said subtraction device with a value set in advance; and
a destination group classification device (123) which performs classification into the first destination group and the second destination group on the basis of the comparison result by said comparison device.

36. The navigation apparatus according to claim 34, wherein said route data generation device generates route data on a route from the departure point to the destination including at least an expected arrival time at the destination while setting the positions in visit orders of the second destination group, on the basis of the available time information and the stay length information on the destinations and the set positions in the visit orders of the first destination group.
